# EUROPEAN PATENT APPLICATION

(11) **EP 4 586 663 A1**
(43) Date of publication of application: **16.07.2025**
(21) Application number: 22962983.7
(22) Date of filing: 24.10.2022
(51) Int. Cl.: H04W 12/06, H04L 9/40, H04W 12/106, H04W 12/108, H04W 12/122

(54) **BROADCAST MESSAGE PROTECTION METHOD AND RELATED APPARATUS**

(71) Applicant: Huawei Technologies Co., Ltd., Shenzhen, Guangdong 518129 (CN)
(72) Inventor: WANG, Wenhui, Shenzhen, Guangdong 518129 (CN); WU, Jianjun, Shenzhen, Guangdong 518129 (CN)
(74) Representative: Pfenning, Meinig & Partner mbB
(86) International application number: PCT/CN2022/127157
(87) International publication number: WO 2024/086995

(57) **Abstract**

This application provides a broadcast message protection method and a related apparatus. In the method, integrity protection information of a first broadcast message may be generated, where the integrity protection information is generated based on a beam index of a beam used to send or receive the first broadcast message; and then the integrity protection information of the first broadcast message may be sent. It can be learned that, in this application, a beam index of a beam used to send or receive a broadcast message may be introduced to generate integrity protection information, so that broadcast messages in different beam directions can be protected at a granularity of a beam direction, and the broadcast messages in the different beam directions can be prevented from being replayed; or a network device can identify, in a timely manner based on the integrity protection information, whether the broadcast messages in the different beam directions are secure, thereby improving security of the broadcast messages sent through an air interface.

## Description

### TECHNICAL FIELD

This application relates to the field of wireless communication technologies, and in particular, to a broadcast message protection method and a related apparatus.

### BACKGROUND

In a wireless communication technology, a broadcast message sent by a network device through an air interface is oriented to all terminals within coverage of a cell. Therefore, the message broadcast by the network device cannot be encrypted and protected by using a user-level symmetric key. In an initial network access phase, the terminal needs to first receive system message broadcast by the network device through the air interface, to establish a communication connection to the network device; and in a cell search and synchronization process, the terminal also needs to receive system message broadcast by the network device through the air interface, to initiate a random access procedure, so as to access a cell and operate normally in the cell.

Therefore, if no security protection is performed on the broadcast message sent by the network device through the air interface, a great loss is caused to a user. For example, if no security protection is performed on the system message, the system message sent by an authorized base station is easily stolen and forged by a false base station. For example, the false base station may first complete frequency and time synchronization with the authorized base station, and then forge system message specific to the authorized base station, to send forged system message at higher power. As a result, the terminal is attached and spoofed by the false base station. Therefore, the false base station may steal user privacy information in the terminal, or the terminal cannot operate normally, or because the false base station tampers with and forges an important field in the system message, an initiated call capability of the terminal is disabled, and the terminal cannot receive a network-initiated service, and cannot access the internet, send an SMS message, or make a call for a long time. Therefore, how to perform security protection on the broadcast message sent by the network device through the air interface is an urgent problem to be resolved.

### SUMMARY

This application provides a broadcast message protection method and a related apparatus, to perform security protection on a broadcast message sent by a network device through an air interface.

According to a first aspect, this application provides a broadcast message protection method. The method may be performed by a communication apparatus. The communication apparatus may be a communication device, or a communication apparatus that can support the communication device in implementing a function required for the method, for example, a chip. For example, the communication apparatus is a network device, or a chip that is disposed in the network device and that is configured to implement a function of the network device, or another component configured to implement the function of the network device. An example in which the network device is used as an execution body is used for description.

The method includes: The network device generates integrity protection information of a first broadcast message, where the integrity protection information is generated based on a beam index of a beam used to send the first broadcast message; and sends the integrity protection information of the first broadcast message.

It can be learned that, in the broadcast message protection method, a beam index of a beam used to send a broadcast message is introduced to generate integrity protection information. Therefore, broadcast messages in different beam directions can be protected at a granularity of a beam direction, and the broadcast messages in the different beam directions can be prevented from being replayed, to implement security protection on the broadcast messages sent through an air interface.

In an optional implementation, the method may further include: The network device sends a signature period corresponding to the first broadcast message on the beam, where the signature period corresponding to the first broadcast message on the beam is a sending period of the integrity protection information of the first broadcast message on the beam. Optionally, in a case in which the first broadcast message is separately sent on M beams in a beam sweeping manner (M is an integer greater than 1), signature periods corresponding to the first broadcast message in all of the M beams may be the same or different, and are independently configured. Optionally, signature periods corresponding to different broadcast messages on a same beam may be the same or different. It can be learned that, in this implementation, the integrity protection information of the first broadcast message is periodically sent, so that additional air interface time-frequency resource overheads caused by sending the integrity protection information can be reduced.

In an optional implementation, the method may further include: The network device receives response information of the first broadcast message, where the response information includes the beam index and a check result of the integrity protection information of the first broadcast message. The network device adjusts, based on the check result of the integrity protection information of the first broadcast message, the signature period corresponding to the first broadcast message on the beam. It can be learned that, in this implementation, the network device may adjust, based on the check result of the integrity protection information of the broadcast message, the corresponding signature period on the beam, for example, determine, based on the check result, that there may be an attacker like a false base station in this beam direction, thereby shortening the signature period and avoiding an air interface attack; and determine, based on the check result, that there is no attack in this beam direction, thereby prolonging the signature period and helping reduce additional air interface time-frequency resource overheads caused by the integrity protection information.

Optionally, on a same beam, integrity protection information of different broadcast messages may be separately or jointly generated. Optionally, on a same beam, the first broadcast message may include different broadcast messages having a same transmission period or different transmission periods, or the first broadcast message may include different broadcast messages having a same transmission period or different transmission periods and a same broadcast sending policy, or the first broadcast message may include different broadcast messages having a same transmission period or different transmission periods, a same broadcast sending policy, and a same signature period. Optionally, an information element may be added to the broadcast message to indicate the signature period of the broadcast message, or the signature period of the broadcast message is added to an existing information element. Optionally, on a same beam, for a plurality of broadcast messages whose integrity protection information may be jointly generated, a signature period corresponding to the plurality of broadcast messages is greater than or equal to a largest transmission period in transmission periods of the plurality of broadcast messages.

In an optional implementation, the integrity protection information sent by the network device is generated not only based on the beam index of the beam, but also based on a timestamp, a downlink frequency, and a cell identity that are used to send the first broadcast message.

In an optional implementation, the response information of the first broadcast message further includes an anti-replay parameter. Correspondingly, the method further includes: The network device verifies, based on the anti-replay parameter, whether the response information of the first broadcast message is a replay message, and if the response information is not the replay message, performs the step of adjusting, based on the check result of the integrity protection information of the first broadcast message, the signature period corresponding to the first broadcast message on the beam. It can be learned that this implementation can prevent the response information of the first broadcast message from being the replay message.

In an optional implementation, the response information of the first broadcast message is encrypted, and the method further includes: The network device decrypts the response information of the first broadcast message, to obtain the beam index and the check result of the integrity protection information of the first broadcast message. This improves security of the received check result.

According to a second aspect, this application further provides a broadcast message protection method, corresponding to the broadcast message protection method in the first aspect. The method may be performed by a communication apparatus. The communication apparatus may be a communication device, or a communication apparatus that can support the communication device in implementing a function required for the method, for example, a chip. For example, the communication apparatus is a terminal device, or a chip that is disposed in the terminal device and that is configured to implement a function of the terminal device, or another component configured to implement the function of the terminal device. An example in which the terminal device is used as an execution body is used for description. The method includes: The terminal device receives integrity protection information of a first broadcast message; and the terminal device checks the integrity protection information based on a beam index of a beam used to receive the first broadcast message, to obtain a check result of the integrity protection information of the first broadcast message.

It can be learned that, in the broadcast message protection method, the terminal device checks the integrity protection information based on the beam index of the beam used to receive the broadcast message. Therefore, security of broadcast messages in different beam directions can be determined at a granularity of a beam direction, and the broadcast messages in the different beam directions can be prevented from being replayed, to improve security of the broadcast messages received through an air interface.

In an optional implementation, the method may further include: The terminal device receives a signature period corresponding to the first broadcast message on the beam, where the signature period corresponding to the first broadcast message on the beam is a sending period of the integrity protection information of the first broadcast message on the beam. Optionally, the beam is a beam with highest signal strength in beams on which the terminal device receives first broadcast messages. It can be learned that, in this implementation, the integrity protection information of the first broadcast message is periodically sent on the beam, so that additional air interface time-frequency resource overheads caused by receiving the integrity protection information can be reduced.

In an optional implementation, the method may further include: The terminal device sends response information of the first broadcast message, where the response information includes the beam index and the check result of the integrity protection information of the first broadcast message, and the check result of the integrity protection information of the first broadcast message is used by a network device to adjust the signature period corresponding to the first broadcast message on the beam. It can be learned that, in this implementation, the terminal device reports the check result of the integrity protection information of the broadcast message. This helps the network device adjust the corresponding signature period on the beam.

Optionally, on a same beam, integrity protection information of different broadcast messages may be separately or jointly received by the terminal device. Optionally, on a same beam, the first broadcast message may include different broadcast messages having a same transmission period or different transmission periods, or the first broadcast message may include different broadcast messages having a same transmission period or different transmission periods and a same broadcast sending policy, or the first broadcast message may include different broadcast messages having a same transmission period or different transmission periods, a same broadcast sending policy, and a same signature period. Optionally, an information element may be added to the broadcast message to indicate the signature period of the broadcast message, or the signature period of the broadcast message is added to an existing information element. Optionally, on a same beam, for a plurality of broadcast messages whose integrity protection information may be jointly received, a signature period corresponding to the plurality of broadcast messages is greater than or equal to a largest transmission period in transmission periods of the plurality of broadcast messages.

In an optional implementation, that the terminal device checks the integrity protection information based on a beam index of a beam used to receive the first broadcast message, to obtain a check result of the integrity protection information of the first broadcast message may be specifically: checking the integrity protection information based on a timestamp, a downlink frequency, a cell identity, and the beam index of the beam that are used to receive the first broadcast message, to obtain the check result of the integrity protection information of the first broadcast message.

In an optional implementation, the response information of the first broadcast message further includes an anti-replay parameter that is used by the network device to verify whether the response information of the first broadcast message is a replay message.

In an optional implementation, that the terminal device sends response information of the first broadcast message includes: encrypting the response information of the first broadcast message, to obtain encrypted response information of the first broadcast message; and sending the encrypted response information of the first broadcast message. This improves security of the check result.

According to a third aspect, this application provides a broadcast message protection method. The method corresponds to the broadcast message protection methods in the first aspect and the second aspect, and is described from a perspective of interaction between a network device and a terminal device. For beneficial effect of this part, refer to related descriptions in the first aspect and the second aspect. Details are not described herein again. In addition, the method is described by using one of a plurality of beams sent by the network device, and one terminal device within coverage of the beam as an example.

The method includes: The network device generates and sends integrity protection information of a first broadcast message, where the integrity protection information is generated based on a beam index of a beam used to send the first broadcast message. The terminal device receives the integrity protection information of the first broadcast message, and checks the integrity protection information based on the beam index of the beam used to receive the first broadcast message, to obtain a check result of the integrity protection information of the first broadcast message.

In an optional implementation, the method may further include: The network device sends a signature period corresponding to the first broadcast message on the beam. The terminal device receives the signature period corresponding to the first broadcast message on the beam, where the signature period corresponding to the first broadcast message on the beam is a sending period of the integrity protection information of the first broadcast message on the beam.

In an optional implementation, the method may further include: The terminal device sends response information of the first broadcast message. The network device receives the response information of the first broadcast message, where the response information includes the beam index and the check result of the integrity protection information of the first broadcast message. The network device adjusts, based on the check result of the integrity protection information of the first broadcast message, the signature period corresponding to the first broadcast message on the beam.

In an optional implementation, the first broadcast message includes different broadcast messages having a same transmission period or different transmission periods.

In an optional implementation, the integrity protection information sent by the network device is generated not only based on the beam index of the beam, but also based on a timestamp, a downlink frequency, and a cell identity that are used to send the first broadcast message. Correspondingly, the terminal device checks the integrity protection information based on the timestamp, the downlink frequency, the cell identity, and the beam index of the beam that are used to receive the first broadcast message, to obtain the check result of the integrity protection information of the first broadcast message.

In an optional implementation, the response information of the first broadcast message further includes an anti-replay parameter. Correspondingly, the method further includes: The network device verifies, based on the anti-replay parameter, whether the response information of the first broadcast message is a replay message, and if the response information is not the replay message, performs the step of adjusting, based on the check result of the integrity protection information of the first broadcast message, the signature period corresponding to the first broadcast message on the beam.

In an optional implementation, the terminal device encrypts the response information of the first broadcast message, to obtain encrypted response information of the first broadcast message. The terminal device sends the encrypted response information of the first broadcast message. Correspondingly, the network device decrypts the received response information of the first broadcast message, to obtain the response information of the first broadcast message.

For related descriptions of this part, refer to the descriptions in the first aspect and the second aspect. Details are not described herein again.

According to a fourth aspect, this application further provides a broadcast message protection method. The method may be performed by a communication apparatus. The communication apparatus may be a communication device, or a communication apparatus that can support the communication device in implementing a function required for the method, for example, a chip. For example, the communication apparatus is a network device, or a chip that is disposed in the network device and that is configured to implement a function of the network device, or another component configured to implement the function of the network device. An example in which the network device is used as an execution body is used for description. The method includes: sending a first broadcast message; receiving response information of the first broadcast message, where the response information includes a beam index of a beam used by a terminal device to receive the first broadcast message, and integrity protection information that is of the first broadcast message and that is generated by the terminal device based on the beam index; and checking the integrity protection information based on the first broadcast message and the beam index, to obtain a check result of the integrity information protection information of the first broadcast message.

It can be learned that the broadcast message protection method helps the network device identify, based on the check result of the integrity information protection information of the first broadcast message, whether the terminal device on the beam is attacked by a false base station, for example, content of the first broadcast message is tampered with by the false base station.

In an optional implementation, the method further includes: The network device adjusts, based on the check result of the integrity protection information of the first broadcast message, a signature period corresponding to the first broadcast message on the beam, where the signature period corresponding to the first broadcast message on the beam is a sending period in which the network device sends integrity protection information of the first broadcast message on the beam. In other words, the signature period is irrelevant to a period of the integrity protection information that is of the first broadcast message and that is sent by the terminal device.

It can be learned that, in this implementation, the network device may adjust, based on the check result of the integrity protection information of the broadcast message, the corresponding signature period on the beam, for example, determine, based on the check result, that there may be an attacker like a false base station in this beam direction, thereby shortening the signature period and avoiding an air interface attack; and determine, based on the check result, that there is no attack in this beam direction, thereby prolonging the signature period and helping reduce additional air interface time-frequency resource overheads caused by the integrity protection information.

In an optional implementation, the method further includes: The network device may send the signature period corresponding to the first broadcast message on the beam.

In an optional implementation, on a same beam, integrity protection information of the network device for different broadcast messages may be separately or jointly generated. Optionally, on a same beam, in the integrity protection information that is of the first broadcast message and that may be generated by the network device, the first broadcast message may include different broadcast messages having a same transmission period or different transmission periods, or the first broadcast message may include different broadcast messages having a same transmission period or different transmission periods and a same broadcast sending policy, or the first broadcast message may include different broadcast messages having a same transmission period or different transmission periods, a same broadcast sending policy, and a same signature period. Optionally, an information element may be added to the broadcast message to indicate the signature period of the broadcast message, or the signature period of the broadcast message is added to an existing information element. Optionally, on a same beam, for a plurality of broadcast messages whose integrity protection information may be jointly generated, a signature period corresponding to the plurality of broadcast messages is greater than or equal to a largest transmission period in transmission periods of the plurality of broadcast messages.

In an optional implementation, that the network device checks the integrity protection information based on the first broadcast message and the beam index, to obtain a check result of the integrity information protection information of the first broadcast message is specifically: checking the integrity protection information based on a timestamp, a downlink frequency, a cell identity, and the beam index that are used to send the first broadcast message, and the first broadcast message, to obtain the check result of the integrity protection information of the first broadcast message.

In an optional implementation, the response information further includes an anti-replay parameter. Correspondingly, the method further includes: The network device verifies, based on the anti-replay parameter, whether the response information of the first broadcast message is a replay message, and if the response information is not the replay message, performs the step of checking the integrity protection information based on the first broadcast message and the beam index, to obtain the check result of the integrity information protection information of the first broadcast message. It can be learned that this implementation can prevent the response information of the first broadcast message from being the replay message.

In an optional implementation, the response information is encrypted, and the network device needs to decrypt the response information of the first broadcast message, to obtain the beam index and the integrity protection information of the first broadcast message. This improves security of the received information.

According to a fifth aspect, this application further provides a broadcast message protection method, corresponding to the broadcast message protection method in the fourth aspect. The method may be performed by a communication apparatus. The communication apparatus may be a communication device, or a communication apparatus that can support the communication device in implementing a function required for the method, for example, a chip. For example, the communication apparatus is a terminal device, or a chip that is disposed in the terminal device and that is configured to implement a function of the terminal device, or another component configured to implement the function of the terminal device. An example in which the terminal device is used as an execution body is used for description.

The method includes: The terminal device receives a first broadcast message. The terminal device generates integrity protection information of the first broadcast message, where the integrity protection information is generated based on a beam index of a beam used to receive the first broadcast message; and sends response information of the first broadcast message, where the response information includes the beam index and the integrity protection information of the first broadcast message.

It can be learned that, in the broadcast message protection method, the terminal device may report the integrity protection information of the first broadcast message. This helps a network device identify whether the terminal device in this beam direction is attacked by a false base station, for example, content of the first broadcast message is tampered with by the false base station.

In an optional implementation, before that the terminal device generates integrity protection information of the first broadcast message on the beam based on the beam index of the beam used to receive the first broadcast message, the method further includes: The terminal device receives a signature period corresponding to the first broadcast message on the beam. The signature period corresponding to the first broadcast message on the beam is a sending period in which the network device sends integrity protection information of the first broadcast message on the beam. In other words, the signature period is irrelevant to a period of the integrity protection information that is of the first broadcast message and that is sent by the terminal device. It can be learned that, in this implementation, the network device periodically sends the integrity protection information of the first broadcast message on the beam, so that additional air interface time-frequency resource overheads caused by sending the integrity protection information can be reduced.

In an optional implementation, the first broadcast message includes different broadcast messages having a same transmission period or different transmission periods. In an optional implementation, the integrity protection information sent by the terminal device is further generated based on a timestamp, a downlink frequency, and a cell identity that are used to receive the first broadcast message.

In an optional implementation, the response information further includes an anti-replay parameter that is used by the network device to verify whether the response information of the first broadcast message is a replay message. It can be learned that this implementation can prevent the response information of the first broadcast message from being the replay message.

In an optional implementation, the terminal device may encrypt the response information of the first broadcast message, to obtain encrypted response information of the first broadcast message; and send the encrypted response information of the first broadcast message. It can be learned that this implementation can improve security of the response information of the first broadcast message.

According to a sixth aspect, this application provides a broadcast message protection method. The method corresponds to the broadcast message protection methods in the fourth aspect and the fifth aspect, and is described from a perspective of interaction between a network device and a terminal device. For beneficial effect of this part, refer to related descriptions in the fourth aspect and the fifth aspect. Details are not described herein again. In addition, the method is described by using one of a plurality of beams sent by the network device, and one terminal device within coverage of the beam as an example.

The method includes: The network device sends a first broadcast message. The terminal device receives the first broadcast message. The terminal device generates integrity protection information of the first broadcast message, where the integrity protection information is generated based on a beam index of a beam used to receive the first broadcast message. The terminal device sends response information of the first broadcast message. Correspondingly, the network device receives the response information of the first broadcast message, where the response information includes the beam index of the beam used by the terminal device to receive the first broadcast message, and the integrity protection information that is of the first broadcast message and that is generated by the terminal device based on the beam index. The network device checks the integrity protection information based on the first broadcast message and the beam index, to obtain a check result of the integrity information protection information of the first broadcast message.

It can be learned that, in the broadcast message protection method, the terminal device may report the integrity protection information of the first broadcast message. This helps the network device identify whether the terminal device in this beam direction is attacked by a false base station, for example, content of the first broadcast message is tampered with by the false base station. For example, in a case in which the network device does not send integrity protection information of the first broadcast message on the beam, the terminal device may also actively report the integrity protection information of the first broadcast message, so that the network device can identify in a timely manner whether there is an attack in this beam direction, thereby improving security of the broadcast message.

In an optional implementation, the method further includes: The network device adjusts, based on the check result of the integrity protection information of the first broadcast message, a signature period corresponding to the first broadcast message on the beam. Correspondingly, the network device may send the signature period corresponding to the first broadcast message on the beam, and the terminal device receives the signature period corresponding to the first broadcast message on the beam. The signature period corresponding to the first broadcast message on the beam is a sending period in which the network device sends the integrity protection information of the first broadcast message on the beam. In other words, the signature period is irrelevant to a period of the integrity protection information that is of the first broadcast message and that is sent by the terminal device.

It can be learned that, in this implementation, the network device may adjust, in a timely manner based on the check result of the integrity protection information of the broadcast message, the corresponding signature period on the beam, for example, determine, based on the check result in a statistical period, that there may be an attacker like a false base station in this beam direction, thereby shortening the signature period and avoiding an air interface attack; and determine, based on the check result in the statistical period, that there is no attack in this beam direction, thereby prolonging the signature period and helping reduce additional air interface time-frequency resource overheads caused by the integrity protection information.

In an optional implementation, on a same beam, integrity protection information sent by the network device for different broadcast messages may be separately or jointly generated.

In an optional implementation, the integrity protection information sent by the terminal device is further generated based on a timestamp, a downlink frequency, and a cell identity that are used to receive the first broadcast message. Correspondingly, that the network device checks the integrity protection information based on the first broadcast message and the beam index, to obtain a check result of the integrity information protection information of the first broadcast message is specifically: checking the integrity protection information based on the timestamp, the downlink frequency, the cell identity, and the beam index that are used to send the first broadcast message, and the first broadcast message, to obtain the check result of the integrity protection information of the first broadcast message.

In an optional implementation, the response information further includes an anti-replay parameter. Correspondingly, the method further includes: The network device verifies, based on the anti-replay parameter, whether the response information of the first broadcast message is a replay message, and if the response information is not the replay message, performs the step of checking the integrity protection information based on the first broadcast message and the beam index, to obtain the check result of the integrity information protection information of the first broadcast message. It can be learned that this implementation can prevent the response information of the first broadcast message from being the replay message.

In an optional implementation, the terminal device may encrypt the response information of the first broadcast message, to obtain encrypted response information of the first broadcast message. The terminal device sends the encrypted response information of the first broadcast message. Correspondingly, the network device receives the response information of the first broadcast message, and decrypts the response information, to obtain the response information of the first broadcast message. It can be learned that this implementation can improve security of the response information of the first broadcast message.

For related descriptions of this part, refer to the descriptions in the fourth aspect and the fifth aspect. Details are not described herein again.

According to a seventh aspect, this application provides a communication apparatus. The communication apparatus may be a network device, or may be an apparatus in the network device, or may be an apparatus that can be used together with the network device. A function of the communication apparatus may be implemented by hardware, or may be implemented by hardware executing corresponding software. The hardware or the software includes one or more units or modules corresponding to the foregoing function. The unit or the module may be software and/or hardware.

Optionally, the communication apparatus includes a processing unit and a communication unit, to perform the method in the first aspect.

The processing unit is configured to generate integrity protection information of a first broadcast message, where the integrity protection information is generated based on a beam index of a beam used to send the first broadcast message.

The communication unit is configured to send the integrity protection information of the first broadcast message.

In an optional implementation, the communication unit is further configured to send a signature period corresponding to the first broadcast message on the beam, where the signature period corresponding to the first broadcast message on the beam is a sending period of the integrity protection information of the first broadcast message on the beam.

In an optional implementation, the communication unit is further configured to receive response information of the first broadcast message, where the response information includes the beam index and a check result of the integrity protection information of the first broadcast message. The processing unit is further configured to adjust, based on the check result of the integrity protection information of the first broadcast message, the signature period corresponding to the first broadcast message on the beam.

In an optional implementation, the response information of the first broadcast message further includes an anti-replay parameter. Correspondingly, the processing unit verifies, based on the anti-replay parameter, whether the response information of the first broadcast message is a replay message, and if the response information is not the replay message, performs the operation of adjusting, based on the check result of the integrity protection information of the first broadcast message, the signature period corresponding to the first broadcast message on the beam.

In an optional implementation, the response information of the first broadcast message is encrypted, and the processing unit is further configured to decrypt the response information of the first broadcast message, to obtain the beam index and the check result of the integrity protection information of the first broadcast message.

For related operations performed by the communication apparatus and beneficial effect, refer to the method and beneficial effect in the first aspect.

Optionally, the communication apparatus includes a communication unit and a processing unit, to perform the method in the fourth aspect.

The communication unit is configured to send a first broadcast message.

The communication unit is further configured to receive response information of the first broadcast message, where the response information includes the beam index of the beam used by a terminal device to receive the first broadcast message, and integrity protection information that is of the first broadcast message and that is generated by the terminal device based on the beam index.

The processing unit is configured to check the integrity protection information based on the first broadcast message and the beam index, to obtain a check result of the integrity information protection information of the first broadcast message.

In an optional implementation, the processing unit is further configured to adjust, based on the check result of the integrity protection information of the first broadcast message, a signature period corresponding to the first broadcast message on the beam, where the signature period corresponding to the first broadcast message on the beam is a sending period in which the network device sends the integrity protection information of the first broadcast message on the beam.

In an optional implementation, the communication unit is further configured to send the signature period corresponding to the first broadcast message on the beam.

In an optional implementation, that the processing unit checks the integrity protection information based on the first broadcast message and the beam index, to obtain a check result of the integrity information protection information of the first broadcast message is specifically: checking the integrity protection information based on a timestamp, a downlink frequency, a cell identity, and the beam index that are used to send the first broadcast message, and the first broadcast message, to obtain the check result of the integrity protection information of the first broadcast message.

In an optional implementation, the response information further includes an anti-replay parameter. Correspondingly, the processing unit verifies, based on the anti-replay parameter, whether the response information of the first broadcast message is a replay message, and if the response information is not the replay message, performs the operation of checking the integrity protection information based on the first broadcast message and the beam index, to obtain the check result of the integrity information protection information of the first broadcast message.

In an optional implementation, the response information is encrypted, and the processing unit further needs to decrypt the response information of the first broadcast message, to obtain the beam index and the integrity protection information of the first broadcast message.

For related operations performed by the communication apparatus and beneficial effect, refer to the method and beneficial effect in the fourth aspect.

According to an eighth aspect, this application provides a communication apparatus. The communication apparatus may be a terminal device, or may be an apparatus in the terminal device, or may be an apparatus that can be used together with the terminal device. The communication apparatus may alternatively be a chip system. A function of the communication apparatus may be implemented by hardware, or may be implemented by hardware executing corresponding software. The hardware or the software includes one or more units or modules corresponding to the foregoing function. The unit or the module may be software and/or hardware.

Optionally, the communication apparatus may perform the communication method in the second aspect, and may include a processing unit and a communication unit.

The communication unit is configured to receive integrity protection information of a first broadcast message.

The processing unit is configured to check the integrity protection information based on a beam index of a beam used to receive the first broadcast message, to obtain a check result of the integrity protection information of the first broadcast message.

In an optional implementation, the communication unit is further configured to receive a signature period corresponding to the first broadcast message on the beam, where the signature period corresponding to the first broadcast message on the beam is a sending period in which a network device sends the integrity protection information of the first broadcast message on the beam.

In an optional implementation, the communication unit is further configured to send response information of the first broadcast message, where the response information includes the beam index and the check result of the integrity protection information of the first broadcast message, and the check result of the integrity protection information of the first broadcast message is used by the network device to adjust the signature period corresponding to the first broadcast message on the beam.

In an optional implementation, that the processing unit checks the integrity protection information based on a beam index of a beam used to receive the first broadcast message, to obtain a check result of the integrity protection information of the first broadcast message may be specifically: checking the integrity protection information based on a timestamp, a downlink frequency, a cell identity, and the beam index of the beam that are used to receive the first broadcast message, to obtain the check result of the integrity protection information of the first broadcast message.

In an optional implementation, the processing unit further encrypts the response information of the first broadcast message, to obtain encrypted response information of the first broadcast message. Correspondingly, the communication unit specifically sends the encrypted response information of the first broadcast message.

For operations performed by the communication apparatus and beneficial effect, refer to the method and beneficial effect in the second aspect.

Optionally, the communication apparatus may perform the communication method in the fifth aspect, and may include a processing unit and a communication unit.

The communication unit is configured to receive a first broadcast message.

The processing unit is configured to generate integrity protection information of the first broadcast message, where the integrity protection information is generated based on a beam index of a beam used to receive the first broadcast message.

The communication unit is further configured to send response information of the first broadcast message, where the response information includes the beam index and the integrity protection information of the first broadcast message.

In an optional implementation, the communication unit is further configured to receive a signature period corresponding to the first broadcast message on the beam.

In an optional implementation, the processing unit is further configured to encrypt the response information of the first broadcast message, to obtain encrypted response information of the first broadcast message. Specifically, the communication unit sends the encrypted response information of the first broadcast message. It can be learned that this implementation can improve security of the response information of the first broadcast message.

For operations performed by the communication apparatus and beneficial effect, refer to the method and beneficial effect in the fifth aspect.

According to a ninth aspect, this application provides a computer-readable storage medium. The storage medium stores instructions. When a computer program or the instructions are executed by a communication apparatus, the method in any one of the first aspect, the second aspect, the fourth aspect, the fifth aspect, or the possible implementations thereof is implemented.

According to a tenth aspect, this application provides a computer program product including instructions. When a communication apparatus reads and executes the instructions, the communication apparatus is enabled to perform the method in any one of the first aspect, the second aspect, the fourth aspect, the fifth aspect, or the possible implementations thereof.

According to an eleventh aspect, this application provides a communication system, including at least one communication apparatus configured to perform the method in the seventh aspect, and at least one communication apparatus configured to perform the method in the eighth aspect.

According to a twelfth aspect, this application provides a circuit. The circuit is coupled to a memory, and the circuit is configured to perform the method in any one of the first aspect, the second aspect, the fourth aspect, and the fifth aspect, or the possible implementations thereof. The circuit may include a chip circuit.

### BRIEF DESCRIPTION OF DRAWINGS

FIG. 1 is a diagram of a communication scenario in which a false base station forges a broadcast message;
FIG. 2 is a diagram of a scenario of beam sweeping of a broadcast message;
FIG. 3 is a diagram of generating integrity protection information of a broadcast message according to an embodiment of this application;
FIG. 4 is a diagram of generating integrity protection information of a plurality of broadcast messages according to an embodiment of this application;
FIG. 5 is a diagram of separately configuring signature periods of a broadcast message on different beams and jointly signing different broadcast messages on a same beam according to an embodiment of this application;
FIG. 6 is a schematic flowchart of a broadcast message protection method 100 according to an embodiment of this application;
FIG. 7 is a schematic flowchart of a broadcast message protection method 101 according to an embodiment of this application;
FIG. 8 is a schematic flowchart of a broadcast message protection method 200 according to an embodiment of this application;
FIG. 9 is a schematic flowchart of a broadcast message protection method 201 according to an embodiment of this application;
FIG. 10 is a schematic flowchart of a broadcast message protection method 300 according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

In embodiments of this application, a network device may also be referred to as an access network device. The access network device may be a device that provides radio access for a terminal device, and may include a radio access network (radio access network, RAN) device and an access node (Access Node, AN) device. The RAN device is mainly a wireless network device in a 3GPP network, and the AN device may be a non-3GPP-defined access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In a system using different radio access technologies, a device having a base station function may have different names. For example, in a long term evolution (long term evolution, LTE) system and in a 5th generation (5th generation, 5G), 6th generation (6th generation, 6G), or even 7th generation (7th generation, 7G) system, the network device may be referred to as a RAN or a next-generation NodeB (next-generation Node base station, gNB), an evolved NodeB (evolved NodeB, eNB, or eNodeB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP), a wireless relay node, a wireless backhaul node, a transmission reception point (transmission reception point, TRP), a transmission point (transmission point, TP), or the like in a wireless fidelity (wireless fidelity, Wi-Fi) system, or one or a group of antenna panels (including a plurality of antenna panels) of a network device in a 5G system; or may be a network node that forms a gNB or a transmission point, for example, a baseband unit (BBU), a distributed unit (distributed unit, DU), or a roadside unit (roadside unit, RSU) in a vehicle-to-everything (vehicle-to-everything, V2X) scenario or an intelligent driving scenario.

In some deployments, the gNB or the transmission point may include a central unit (central unit, CU), a DU, and the like. The gNB or the transmission point may further include a radio frequency unit (radio unit, RU). The CU implements some functions of the gNB or the transmission point, and the DU implements some functions of the gNB or the transmission point. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the physical layer, or is converted from information at the physical layer. Therefore, in this architecture, higher layer signaling such as RRC layer signaling or PDCP layer signaling may also be considered as being sent by the DU or sent by the DU and the RU. It may be understood that the network device may be a CU node, a DU node, or a device including the CU node and the DU node. Optionally, the network device may alternatively be an auxiliary communication device, for example, a satellite.

In embodiments of this application, the terminal device is a device having a wireless transceiver function, and may be a device deployed on land, including an indoor device or an outdoor device, a handheld device, a wearable device, or a vehicle-mounted device, may be deployed on water (for example, on a ship), or may be deployed in the air (for example, on an aircraft, a balloon, or a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The terminal device sometimes may also be referred to as a terminal, user equipment (user equipment, UE), an access terminal device, a vehicle-mounted terminal, an industrial control terminal, a UE unit, a UE station, a mobile station, a remote station, a remote terminal device, a mobile device, a UE agent, a UE apparatus, or the like. The terminal may alternatively be fixed or movable.

This application is applicable to a communication system of various radio access technologies (radio access technologies, RATs), for example, an LTE communication system, a 5G (or referred to as a new radio (new radio, NR)) communication system, or a transition system between an LTE communication system and a 5G communication system. The transition system may also be referred to as a 4.5G communication system, or certainly may be a future communication system, for example, a 6th generation (6th generation, 6G) or even 7th generation (7th generation, 7G) system. A network architecture and a service scenario described in embodiments of this application are intended to describe the technical solutions in embodiments of this application more clearly, and do not constitute a limitation on the technical solutions provided in embodiments of this application. A person of ordinary skill in the art may learn that with evolution of the communication network architecture and emergence of new service scenarios, the technical solutions provided in embodiments of this application are also applicable to similar technical problems.

To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. A term "and/or" describes only an association relationship between associated objects and indicates that there may be three relationships. For example, A and/or B may indicate the following three cases: Only A exists, both A and B exist, and only B exists. The character "/" generally indicates an "or" relationship between the associated objects.

In a wireless communication technology, a broadcast message sent by a network device through an air interface is oriented to all terminals within coverage of a cell. Therefore, the message broadcast by the network device cannot be encrypted and protected by using a user-level symmetric key. In an initial network access phase, the terminal needs to first receive system message broadcast by the network device through the air interface, to establish a communication connection to the network device; and in a cell search and synchronization process, the terminal also needs to receive system message broadcast by the network device through the air interface, to initiate a random access procedure, so as to access a cell and operate normally in the cell.

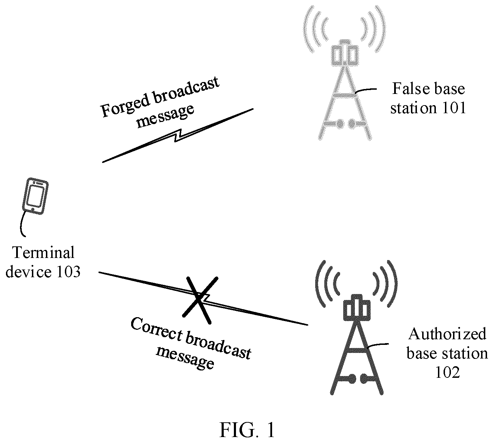

Therefore, if no security protection is performed on the broadcast message sent by the network device through the air interface, a great loss is caused to a user. For example, if no security protection is performed on the system message, the system message sent by an authorized base station is easily stolen and forged by a false base station. In a communication scenario in which a false base station forges a broadcast message shown in FIG. 1, the false base station 101 may first complete frequency and time synchronization with an authorized base station 102, and then forge system message specific to the authorized base station 102, to send forged system message at higher power. As a result, a terminal device 103 is attached and spoofed by the false base station 101. Therefore, the false base station 101 may steal user privacy information in the terminal device 103, or the terminal device 103 cannot operate normally, or because the false base station 101 tampers with and forges an important field in the system message, an initiated call capability of the terminal device 103 is disabled, and the terminal device cannot receive a network-initiated service, and cannot access the internet, send an SMS message, or make a call for a long time. Therefore, how to perform security protection on the broadcast message sent by the network device through the air interface is an urgent problem to be resolved.

According to the broadcast message protection method provided in this application in a beam sweeping scenario, integrity protection information of a broadcast message in a corresponding beam direction may be generated based on a beam index, to improve security of the broadcast message that requires security protection.

For ease of understanding this application, the following describes some concepts in the embodiments of this application.

### 1. Broadcast message

In this application, messages sent between a network device and a terminal device in broadcast mode through an air interface are collectively referred to as a broadcast message. For example, system message, a paging message, and the like that are transmitted between the network device and the terminal device are sent in broadcast mode. In other words, the broadcast message may be the system message or the paging message. The system message may be a master information block (Master Information Block, MIB) or a system information block (System Information Block, SIB). The MIB and a SIB 1 are referred to as minimum system information (Minimum System Information, MSI), and system information, such as a SIB 2 to a SIB 12, other than the MIB and the SIB 1 is referred to as another system information block (Other System Information, OSI). The SIB 1 is also referred to as the remaining minimum system message (Remaining Minimum System Information, RMSI).

The MIB carries necessary information for the terminal device to access a network, for example, a system frame number (System Frame Number, SFN) used for time synchronization between the terminal device and a network side, a subcarrier spacing, and a parameter configuration of DCI indicating carrying and scheduling of the SIB 1. The MIB message is carried on a physical broadcast channel (Physical Broadcast Channel, PBCH) to be sent. A primary synchronization signal (PSS), a secondary synchronization signal (SSS), and the broadcast channel (PBCH) form a synchronization signal block (Synchronization Signal Block, SSB) to be sent together. One SSB occupies 20 resource blocks (resource blocks, RBs) in frequency domain and occupies four symbols in time domain. The symbol may be an orthogonal frequency division multiplexing (Orthogonal Frequency Division Multiplexing, OFDM) symbol, and one RB includes 12 subcarriers.

The SIB 1 carries cell access information, scheduling information of the OSI, an access restriction parameter, and the like. The OSI generally includes a camping parameter of a current cell, a reselection parameter, and parameters such as intra-frequency, inter-frequency, and inter-RAT neighboring cells. Details are not described herein. The SIB 1 and the OSI are transmitted on a physical downlink shared channel (Physical Downlink Shared Channel, PDSCH), and an RB (or a frequency domain location) occupied by the PDSCH for transmitting the SIB 1 and the OSI is dynamically scheduled.

### 2. Transmission period

In this application, a broadcast message is periodically transmitted in a transmission period. In this application, the transmission period of the broadcast message is a sending period of the broadcast message at a layer 1. In this application, a transmission period of a MIB or a SIB 1 is a period of repeatedly sending the MIB or the SIB 1 at the layer 1. A scheduling transmission period of the MIB or the SIB 1 is a sending period of system information at a layer 3. For example, in the respective scheduling transmission period, content of an RRC layer message of the MIB or the SIB 1 remains unchanged. For example, the scheduling transmission period of the MIB is 80 ms, and the MIB may be repeatedly sent in a periodicity of 20 ms within 80 ms, that is, the MIB is repeatedly sent four times within 80 ms, that is, a periodicity of repeated sending is 20 ms. For another example, the scheduling transmission period of the SIB 1 is 160 ms, and a periodicity of repeated sending is 20 ms. That is, the SIB 1 may be repeatedly sent in a periodicity of 20 ms within 160 ms. Optionally, if another SIB does not need to be repeatedly sent at the layer 1, a transmission period of the another SIB is equal to a scheduling transmission period at the layer 3.

Optionally, a network device may configure an SSB periodicity to 5 ms, 10 ms, 20 ms, 40 ms, 80 ms, and 160 ms based on an information element "ssb-periodicityServingCell" in the system information. The SSB periodicity is an SSB beam sweeping period. A plurality of SSBs are sent in the SSB periodicity, and the SSBs may correspond to different beam directions, to complete beam sweeping.

### 3. Beam sweeping

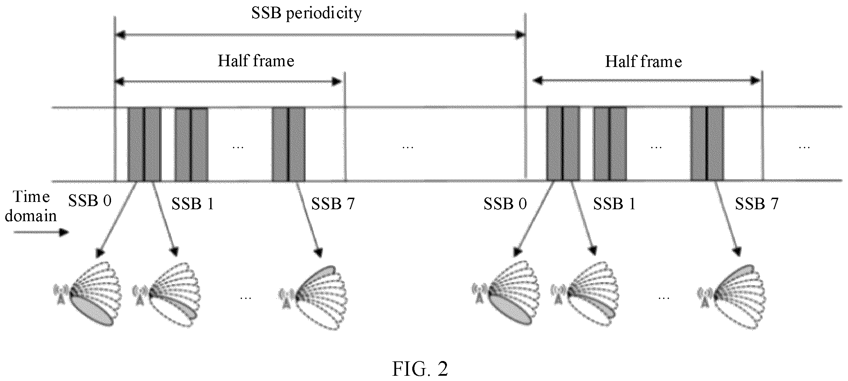

In this application, a broadcast message is sent in a beam sweeping manner. Beam sweeping means that a beam is sent and/or received in a preset direction in a specific periodicity or time period, to cover a specific space area. For example, in a diagram of a beam sweeping scenario shown in FIG. 2, an example in which the broadcast message is an SSB is used. It is assumed that eight SSBs are configured in a beam sweeping set of the SSB, and each SSB corresponds to one SSB beam or one SSB resource block. In time domain, within 5 ms in a half frame of each SSB transmission periodicity, a network device sends one SSB eight times on each SSB beam, for example, an SSB 0 to an SSB 7. In other words, the network device sends eight SSBs in different beam directions in a beam sweeping manner, to complete beam sweeping within entire cell coverage. When moving in a system, a terminal device continuously performs cell search and measurement based on the SSBs, selects an appropriate SSB beam, obtains one SSB through parsing, and then obtains information such as a cell identity, a system frame number (System Frame Number, SFN), and an SSB index of the SSB obtained through parsing, to implement initial access and mobility management of the terminal device. The SSB index may be used as a beam index. One SSB is one SSB resource block or one SSB beam corresponding to one SSB index.

This application provides a broadcast message protection method 100 in a beam sweeping scenario. A network device may generate and send integrity protection information of a broadcast message based on a beam index of a beam used to send the broadcast message. Correspondingly, a terminal device may receive the integrity protection information of the broadcast message. In addition, the terminal device checks the integrity protection information based on the beam index of the beam used to receive the broadcast message, to obtain a check result of the integrity protection information of the broadcast message, for example, identifies whether the broadcast message is secure or is from an authorized base station. It can be learned that, in the broadcast message protection method 100, the beam index is used as an input parameter of an algorithm for generating the integrity protection information, so that a broadcast message at a beam granularity can be protected, and broadcast messages of different beams can be prevented from being replayed. This improves security of the broadcast message.

This application further provides a broadcast message protection method 200 in a beam sweeping scenario. A network device sends a broadcast message. A terminal device receives the broadcast message, and generates integrity protection information of the broadcast message based on a beam index of a beam used to receive the broadcast message. The terminal device sends response information of the broadcast message, where the response information includes the beam index and the integrity protection information. The network device receives the response information of the broadcast message, and checks the integrity protection information based on the broadcast message and the beam index, to obtain a check result of the integrity information protection information of the broadcast message. It can be learned that, in the broadcast message protection method 200, the network device can identify whether there is an attack of a false base station in this beam direction, for example, content of the broadcast message is tampered with by the false base station. This improves security of the broadcast message.

This application further provides a broadcast message protection method 300 in a beam sweeping scenario. The broadcast message protection method 300 may include the broadcast message protection method 100 and the broadcast message protection method 200. For a broadcast message for which a network device does not send integrity protection information, after receiving the broadcast message, a terminal device may choose to generate integrity protection information of the broadcast message, so that the network device checks the integrity protection information, obtains a check result of the integrity information protection information of the broadcast message, and identifies in a timely manner whether there is an attack of a false base station in this beam direction, for example, content of the broadcast message is tampered with by the false base station. For a broadcast message for which a network device sends integrity protection information, a terminal device may report a check result in a timely manner, so that the network device learns in a timely manner whether the broadcast message received by the terminal device is secure. This improves security of the broadcast message.

Optionally, in this application, the network device may further send a signature period corresponding to the broadcast message on a beam, where the signature period corresponding to the broadcast message on the beam is a sending period of the integrity protection information of the broadcast message on the beam. In this way, in this application, the integrity protection information of the broadcast message is sent in the signature period. This can reduce air interface time-frequency resource overheads caused by the integrity protection information.

Optionally, in this application, the network device may adjust, based on the check result of the integrity protection information of the broadcast message on the beam, the signature period corresponding to the broadcast message on the beam. In this way, the network device may shorten the signature period on the beam on which the false base station exists, thereby improving security of the broadcast message; or may prolong the signature period on the beam on which no false base station exists, thereby reducing air interface time-frequency resource overheads.

Optionally, the broadcast message protection method described in this application for a broadcast message on one beam is applicable to some or all of a plurality of sweeping beams configured for the broadcast message. This is not limited in this application.

Optionally, the security algorithm used to obtain the integrity protection information may be classified into two types: a symmetric solution and an asymmetric solution. In the symmetric solution, a symmetric key is used for integrity protection. To be specific, a key used to generate the integrity protection information is the same as a key used to check the integrity protection information. The integrity protection information may be a hash (HASH) value or message authentication code for integrity (Message Authentication Code for Integrity, MAC-I). A security algorithm of the symmetric solution may include but is not limited to a message authentication algorithm like a hash-based message authentication code-security hash algorithm (Hash-based Message Authentication Code-Security Hash Algorithm, HMAC-SHA) 2 or HMAC-SHA3, or a post-quantum algorithm.

In the asymmetric solution, an asymmetric key is used for integrity protection. To be specific, a key used to generate the integrity protection information is different from a key used to check the integrity protection information. For example, the network device generates the integrity protection information by using a private key of a base station, and the terminal device checks the integrity protection information by using a master public key and a public key that is of the base station and that is from the network device. A core network device generates a pair of master public key (Master Public Key, MPK) and master private key (Master Private Key, MSK). The master private key is securely stored in the core network device, and the master public key is securely delivered to the terminal device, and may be preset in the terminal device when the terminal device is delivered from a factory. After the network device and the core network device perform bidirectional identity authentication according to an internet security protocol (Internet Protocol Security, IPsec), the network device sends a request message to the core network device, where the request message includes the public key of the base station, the request message is used to request the private key of the base station corresponding to the public key of the base station, and the public key of the base station includes a base station identity and a validity period. After receiving the request message, the core network device generates the private key of the base station for the base station based on the public key of the base station and the locally stored master private key, and sends the private key of the base station to the network device. In the asymmetric solution, the integrity protection information may be a digital signature (digital signature, DS). The asymmetric solution is mainly classified into two types. One is a signature protection solution based on a digital certificate or a public key infrastructure (Public Key Infrastructure, PKI), where the integrity protection information needs to carry the digital signature and the digital certificate. The other is a signature protection solution based on an identity, where the integrity protection information needs to carry the digital signature and the identity. A security signature algorithm of the asymmetric solution may include but is not limited to an elliptic curve digital signature algorithm (Elliptic Curve Digital Signature Algorithm, ECDSA), a classic cryptographic algorithm like RSA proposed by Ron Rivest (Ron Rivest), Adi Shamir (Adi Shamir), and Leonard Adleman (Leonard Adleman), or a post-quantum cryptographic algorithm like a lattice-based (Lattice-based) algorithm.

Optionally, the integrity protection information of the broadcast message may be generated not only based on the beam index of the beam used to send or receive the broadcast message, but also based on one or more of the following information used to send or receive the broadcast message: a timestamp, a downlink frequency, and a cell identity. Optionally, the broadcast message sent by the network device and the integrity protection information of the broadcast message may be sent together, or may be sent separately. For example, another message is defined to transmit the integrity protection information of the broadcast message. Optionally, the broadcast message sent by the network device may not only carry the integrity protection information, but also carry the beam index and one or more of the foregoing information. The information may be referred to as an anti-replay parameter, and is used by the terminal device to determine whether the broadcast message is a replay message.

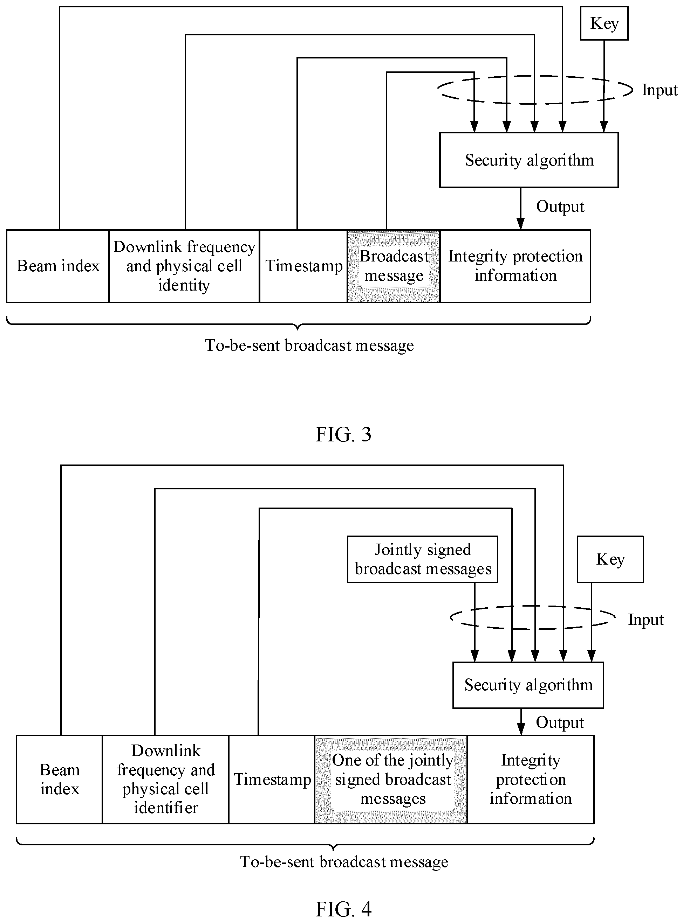

For example, FIG. 3 is a diagram of a structure of a to-be-sent broadcast message according to an embodiment of this application. In FIG. 3, the broadcast message carrying integrity protection information is used as an example. As shown in FIG. 3, when the broadcast message is sent, not only a broadcast message and the integrity protection information of the broadcast message are carried, but also a beam index of a beam, a downlink frequency, a cell identity (for example, a physical cell identifier), and a timestamp that are used to send or receive the broadcast message are carried. Generating the integrity protection information according to a security algorithm may be obtaining the integrity protection information based on the broadcast message, the timestamp, the downlink frequency, the cell identity, the beam index of the beam used to send or receive the broadcast message, and a key as inputs of the security algorithm. The broadcast message carried in the to-be-sent broadcast message, or a broadcast message input by the security algorithm may be an information element that is of the broadcast message and that is from a higher layer. For example, if the broadcast message is system message, the broadcast message is message content of the system message at a layer 3, and another parameter carried in the broadcast message may be parameter information added to a physical layer.

Optionally, in this application, in addition to the beam index, the integrity protection information may be generated based on other beam index information instead of the beam index, for example, another parameter that has a mapping correspondence with the beam index, like an SFN, a slot, or a subframe number that corresponds to the broadcast message sent on the beam, or an SSB index. Optionally, the cell identity may be a physical cell identifier (physical cell identifier, PCI), the downlink frequency may be a downlink absolute radio frequency channel number (Absolute Radio Frequency Channel Number, DL ARFCN), and the timestamp may include information such as a year, a month, a date, an hour, a minute, and a second (millisecond or microsecond) that correspond to a transmission time (transmission time interval (transmission time interval, TTI), a subframe, a slot (slot), a minislot (minislot), or the like). Optionally, if time synchronization between the terminal device and the network device is accurate to minutes, it may be selected that the year/month/day/hour is not transmitted, and only a value of "minute mod 3" and a value of the second are transmitted, to reduce air interface transmission overheads. In this way, the terminal device side may obtain, based on a truncated timestamp and a system frame number carried in the broadcast message to be sent, a complete time for synchronization with an access network. Optionally, a time counter may also be used as the timestamp, and the time counter is a coordinated universal time (Universal Time Coordinated, UTC), for example, in seconds, minutes, or others. The timestamp or time counter may use a least significant bit (least significant bit, 1sb) instead of a full value. Optionally, a sequence number may also be used as the timestamp.

Optionally, within coverage of a cell, configured signature periods corresponding to the broadcast message in different sweeping beams are separately configured, and the network device adaptively adjusts the signature period of the broadcast message on the corresponding beam based on the check result reported by the terminal device or the integrity protection information.

Optionally, on a same beam, different broadcast messages having a same transmission period or different transmission periods, or different broadcast messages having a same broadcast sending policy and a same transmission period or different transmission periods, or different broadcast messages having a same transmission period or different transmission periods, a same broadcast sending policy, and a same signature period may be used to jointly generate corresponding integrity protection information (which may also be referred to as a joint signature). Optionally, an information element may be added to the broadcast message to indicate the signature period of the broadcast message, or the signature period of the broadcast message is added to an existing information element.

Optionally, on a same beam, for a plurality of broadcast messages whose integrity protection information may be jointly generated, a signature period corresponding to the plurality of broadcast messages is greater than or equal to a largest transmission period in transmission periods of the plurality of broadcast messages. For example, a scheduling transmission period of a SIB 1 is 160 ms (content of an RRC layer message of the SIB 1 does not change in the scheduling transmission period), and the network device repeatedly sends the SIB 1 eight times within 160 ms (a key indicator of a network access delay of the terminal device is reduced, to make different terminal devices access the base station as soon as possible). That is, a period of repeated sending of the SIB 1 at the physical layer is 20 ms. It is assumed that transmission periods of a SIB 2 and a SIB 4 are 320 ms. It is assumed that a transmission period of a SIB 5 is 640 ms. If the network device selects the SIB 1, the SIB 2, and the SIB 4 for a joint signature, a signature period needs to be greater than or equal to a largest value in the transmission periods 20 ms and 320 ms of the SIB 1, the SIB 2, and the SIB 4. For example, a smallest signature period may be set to 320 ms. It is assumed that the network device selects the SIB 1, the SIB 2, the SIB 4, and the SIB 5 for a joint signature. In this case, a signature period needs to be greater than or equal to a largest value in the transmission periods 20 ms, 320 ms, and 640 ms of the SIB 1, the SIB 2, the SIB 4, and the SIB 5. For example, a smallest signature period may be set to 640 ms.

Optionally, the integrity protection information jointly generated by the plurality of broadcast messages may be carried in each broadcast message to be transmitted, or may be carried in one of the broadcast messages to be transmitted, or may be carried in a last broadcast message (that is, a broadcast message, with a last time domain resource location in a same transmission period, in the plurality of broadcast messages) to be transmitted, or may be carried in another defined message to be transmitted. The plurality of broadcast messages may also be referred to as jointly signed broadcast messages.

FIG. 4 is a diagram of a structure of another to-be-sent broadcast message according to an embodiment of this application. In FIG. 4, an example in which integrity protection information is carried in one broadcast message to be transmitted is used. As shown in FIG. 4, for a plurality of broadcast messages having a same beam index, a same downlink frequency, and a same cell identity, integrity protection information may be jointly generated. A difference between the manner of generating the integrity protection information shown in FIG. 3 and a manner shown in FIG. 4 lies in that an input of a security algorithm shown in FIG. 4 is jointly signed broadcast messages, namely, the plurality of broadcast messages. As shown in FIG. 4, the integrity protection information generated according to the security algorithm may be obtained based on the jointly signed broadcast message, a timestamp, a downlink frequency, a cell identity, a beam index, and a key as the input of the security algorithm.

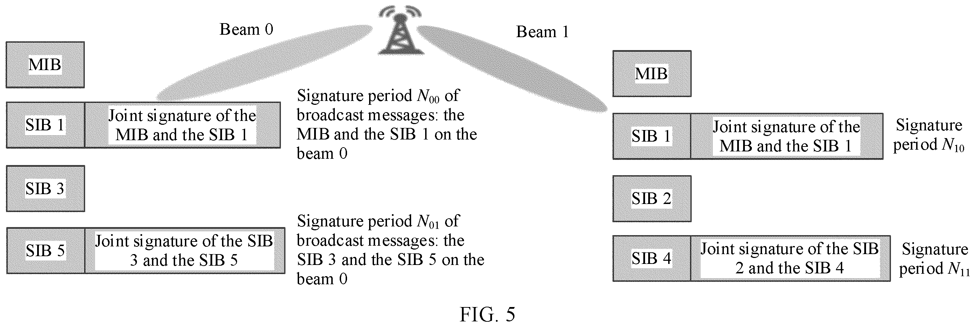

For another example, FIG. 5 is a diagram of separately configuring corresponding signature periods of a broadcast message on different beams and jointly signing different broadcast messages on a same beam according to an embodiment of this application. As shown in FIG. 5, it is assumed that a MIB and a SIB 1 have a same broadcast sending policy (for example, both are sent in broadcast mode), a same transmission period, and a same signature period, and may be jointly signed. As shown in FIG. 5, on a same beam 0, a joint signature of a MIB and a SIB 1 (that is, jointly generated integrity protection information) may be carried in the SIB 1 as a non-key field, or carried in a new information element, or carried in payload (payload) at a layer 1 or layer 2 of the SIB 1. In addition, on the beam 0, a signature period corresponding to the MIB and the SIB 1 is N₀₀. On the same beam 0, a joint signature of a SIB 3 and a SIB 5 (that is, jointly generated integrity protection information) may be carried in the SIB 5 as a non-key field, or carried in a new information element, or carried in payload (payload) at a layer 1 or layer 2 of the SIB 5. In addition, on the beam 0, a signature period corresponding to the SIB 3 and the SIB 5 is N₀₁. On a same beam 1, a joint signature of a MIB and a SIB 1 (that is, jointly generated integrity protection information) may be carried in the SIB 1 as a non-key field, or carried in a new information element, or carried in payload (payload) at a layer 1 or layer 2 of the SIB 1. In addition, on the beam 1, a signature period corresponding to the MIB and the SIB 1 is N₁₀. On the same beam 1, a joint signature of a SIB 3 and a SIB 5 (that is, jointly generated integrity protection information) may be carried in the SIB 5 as a non-key field, or carried in a new information element, or carried in payload (payload) at a layer 1 or layer 2 of the SIB 5. In addition, on the beam 1, a signature period corresponding to the SIB 3 and the SIB 5 is N₁₁. It can be learned that the network device may configure the MIBs and the SIBs 1 on different beams respectively. For example, on the beam 0 and the beam 1, the corresponding signature periods are N₀₀ and N₁₀.

The following further describes the broadcast message protection method provided in embodiments of this application with reference to accompanying drawings.

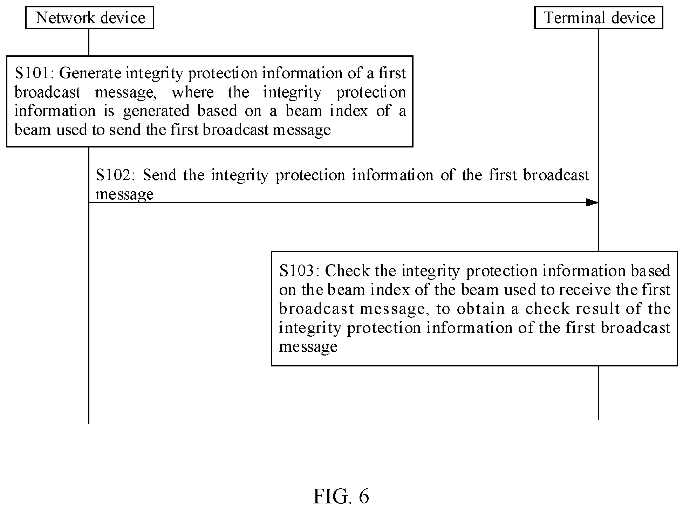

FIG. 6 is a schematic flowchart of the broadcast message protection method 100 according to an embodiment of this application. As shown in FIG. 6, in the broadcast message protection method 100, a network device may generate and send integrity protection information of a broadcast message. The broadcast message protection method 100 may include but is not limited to the following steps.

S101: The network device generates integrity protection information of a first broadcast message, where the integrity protection information is generated based on a beam index of a beam used to send the first broadcast message.

Optionally, for a method for generating the integrity protection information of the first broadcast message by the network device, refer to related content in any one of FIG. 3 to FIG. 5. Details are not described herein again. For example, integrity protection information generated by the network device based on a symmetric solution may be a hash value or MAC-I, and integrity protection information generated by the network device based on an asymmetric solution may be a digital signature. Correspondingly, the first broadcast message may be one broadcast message like a MIB, or may be a plurality of broadcast messages such as a MIB and a SIB 1.

S102: The network device sends the integrity protection information of the first broadcast message, and correspondingly, a terminal device receives the integrity protection information of the first broadcast message.

As described above, the network device may include the integrity protection information in the first broadcast message and send the integrity protection information and the first broadcast message together or separately. Details are not described herein again. In a case in which the network device separately sends the first broadcast message on the beam and the integrity protection information of the first broadcast message on the beam, the network device also needs to send the integrity protection information of the first broadcast message on the beam.

S103: The terminal device checks the integrity protection information based on the beam index of the beam used to receive the first broadcast message, to obtain a check result of the integrity protection information of the first broadcast message.

Optionally, for the terminal device, the terminal device may receive first broadcast messages on a plurality of beams, but the integrity protection information checked by the terminal device is integrity protection information of the first broadcast message on the beam with highest signal received strength in the first broadcast messages received by the terminal device.

Optionally, in input parameters of the security algorithms in FIG. 3 and FIG. 4, the timestamp, the downlink frequency, the cell identity, and the beam index may also be referred to as an anti-replay parameter, to prevent the broadcast message received by the terminal device from being a replay message. Correspondingly, the network device may send the anti-replay parameter and the integrity protection information together to the terminal device, and the terminal device may verify, based on the anti-replay parameter and the integrity protection information, whether the broadcast message is from an authorized base station.

In an optional implementation, if the network device generates the integrity protection information based on the symmetric solution, the terminal device may verify, based on the anti-replay parameter, the integrity protection information, a key that is the same as that of the network device side, and a security algorithm that is the same as that of the network device side, whether the first broadcast message is from the authorized base station. Specifically, step S103 may include: The terminal device generates integrity protection information based on the received anti-replay parameter (including the beam index), the received first broadcast message, the same key, and the same security algorithm; the terminal device checks whether the generated integrity protection information is consistent with (that is, completely the same as) the integrity protection information sent by the network device; and if the generated integrity protection information is consistent with the integrity protection information, the check result of the integrity protection information of the first broadcast message is that the first broadcast message is from the authorized base station; or if the generated integrity protection information is inconsistent with the integrity protection information, the check result of the integrity protection information of the first broadcast message is that the first broadcast message is from an unauthorized base station.

In another optional implementation, if the network device generates the integrity protection information based on the asymmetric solution, the terminal device may verify, based on the anti-replay parameter, the integrity protection information, and an existing public key, whether the first broadcast message is from the authorized base station. Specifically, step S103 may include: The terminal device checks, based on the received anti-replay parameter (including the beam index), the received first broadcast message, an existing public key, and a known same security algorithm, the integrity protection information sent by the network device, to obtain the check result of the integrity protection information of the first broadcast message, for example, the first broadcast message is from the authorized base station, or the first broadcast message is from an unauthorized base station.

It can be learned that, in the broadcast message protection method 100, the beam index is used as an input parameter of an algorithm for generating the integrity protection information, so that a broadcast message at a beam granularity can be protected, and broadcast messages of different beams can be prevented from being replayed. This improves security of the broadcast message.

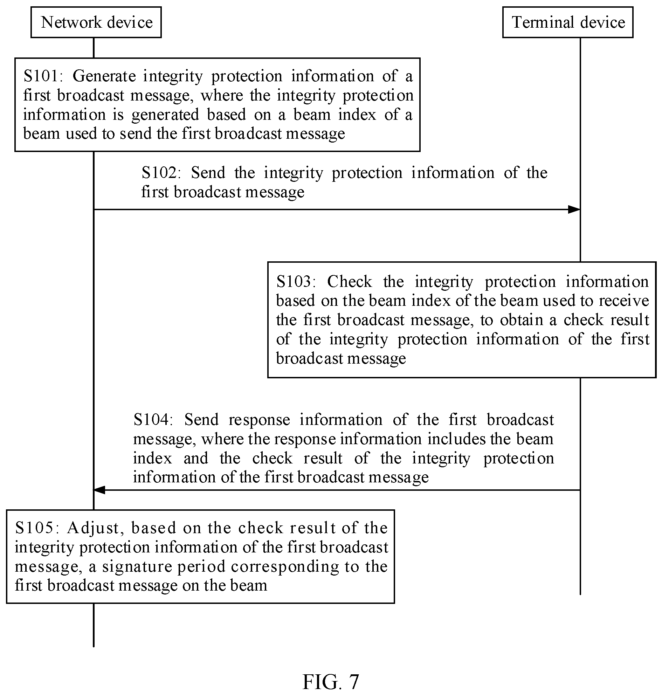

FIG. 7 is a schematic flowchart of a broadcast message protection method 101 according to an embodiment of this application. A difference between the broadcast message protection method 101 shown in FIG. 7 and the broadcast message protection method 100 shown in FIG. 6 lies in that, in the broadcast message protection method 101, a network device may send a signature period corresponding to a broadcast message on a beam, and adjust, based on a check result of integrity protection information of the broadcast message on the beam, the signature period corresponding to the broadcast message on the beam. As shown in FIG. 7, the broadcast message protection method 101 may include but is not limited to the following steps.

S101: The network device generates integrity protection information of a first broadcast message, where the integrity protection information is generated based on a beam index of a beam used to send the first broadcast message.

S102: The network device sends the integrity protection information of the first broadcast message and a signature period corresponding to the first broadcast message, and correspondingly, a terminal device receives the integrity protection information of the first broadcast message and the signature period corresponding to the first broadcast message on the beam.

As described above, the signature period may be carried in the first broadcast message to be sent, for example, a new information element or an existing information element. Details are not described herein again. The integrity protection information of the first broadcast message on the beam and the first broadcast message may be carried and sent together, or may be separately sent. For the terminal device, the terminal device may periodically receive, based on the signature period, the integrity protection information of the first broadcast message on the corresponding beam.

S103: The terminal device checks the integrity protection information based on the beam index of the beam used to receive the first broadcast message, to obtain a check result of the integrity protection information of the first broadcast message.

Optionally, for related content of steps S101 to S103, further refer to the broadcast message protection method 100 in FIG. 6. Details are not described herein again.

S104: The terminal device sends response information of the first broadcast message, and correspondingly, the network device receives the response information of the first broadcast message, where the response information includes the beam index and the check result of the integrity protection information of the first broadcast message.

Optionally, the terminal device may choose to encrypt the response information, and then feed back encrypted response information to the network device. For example, in a radio resource control (radio resource control, RRC) connected mode, the terminal device may choose to encrypt the response information by using a symmetric key, or in an RRC non-connected mode, the terminal device may choose to encrypt the response information by using a public key of the base station. Correspondingly, the network device needs to decrypt the received response information by using a corresponding key, to obtain the check result of the integrity protection information of the first broadcast message.

Optionally, the check result included in the response information may be indication information indicating the check result. Optionally, if the check result is that the check fails, the response information may further include a signature obtaining indication that is used to request the network device to generate and send the integrity protection information when the broadcast message is sent on the beam again.

Optionally, the terminal device may send the response information via the following signaling, for example, a message in a random access procedure, a message (Message, MSG) 3 (RRC setup request (RRCSetupRequest) message), an MSG 5 (RRC setup complete (RRCSetupComplete) message), a registration request (RegistrationRequest) message, a non-access stratum identity response (NAS Identity Response) message, an authentication response (AuthenticationResponse) message, a non-access stratum security mode complete (NAS Security Mode Complete) message, an access stratum security mode complete (AS Security Mode Complete) message, and a measurement report (MeasurementReport) message. The terminal device may alternatively send the response information based on a type of a redefined new message.

S105: The network device adjusts, based on the check result of the integrity protection information of the first broadcast message, the signature period corresponding to the first broadcast message on the beam.

Optionally, if the check result of the integrity protection information of the first broadcast message is that the terminal device identifies that the first broadcast message is from an authorized base station or is secure, the signature period corresponding to the first broadcast message on the beam may be prolonged; or if the check result of the integrity protection information of the first broadcast message is that the terminal device identifies that the first broadcast message is from an unauthorized base station or is tampered with, the signature period corresponding to the first broadcast message on the beam may be shortened.

Optionally, the network device may perform statistical analysis on the check result of the integrity protection information of the first broadcast message on the beam in a statistical period, to adaptively adjust the signature period corresponding to the first broadcast message on the beam. For example, in the statistical period, if a success rate of the check result of the integrity protection information of the first broadcast message on the beam is high, the signature period corresponding to the first broadcast message on the beam is prolonged; or if a success rate is low, the signature period corresponding to the first broadcast message on the beam is shortened. Optionally, that the success rate of the check result of the integrity protection information of the first broadcast message on the beam is high may be that a proportion of a check result of successful check in all check results in the statistical period is greater than or equal to a threshold; and that the success rate of the check result of the integrity protection information of the first broadcast message on the beam is low may be that the proportion of the check result of successful check in all the check results in the statistical period is less than the threshold. Optionally, the threshold may be preset by a system or indicated by signaling. This is not limited in this application.

It can be learned that, in the broadcast message protection method 101, not only the beam index may be introduced to improve security of a broadcast message in a beam direction, but also the signature period corresponding to the broadcast message on the beam may be adaptively adjusted, so as to achieve a balance between the security of the broadcast message and required air interface time-frequency resource overheads.

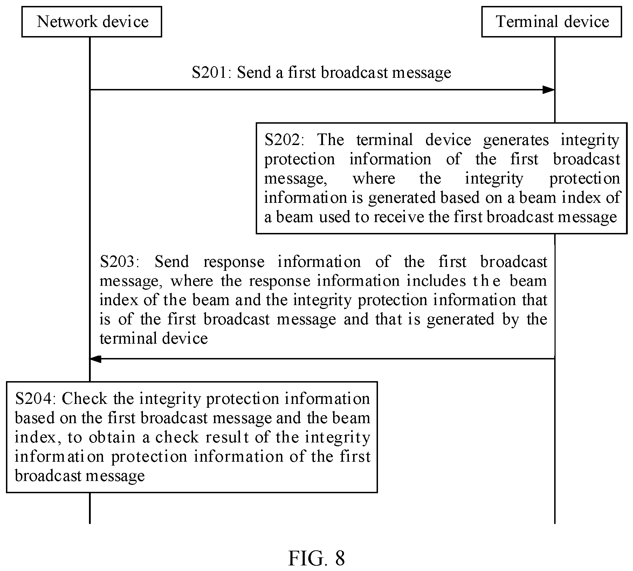

FIG. 8 is a schematic flowchart of the broadcast message protection method 200 according to an embodiment of this application. As shown in FIG. 8, in the broadcast message protection method 200, a terminal device may generate and send integrity protection information of a broadcast message. The broadcast message protection method 200 may include but is not limited to the following steps.

S201: A network device sends a first broadcast message, and correspondingly, the terminal device receives the first broadcast message.

S202: The terminal device generates integrity protection information of the first broadcast message, where the integrity protection information is generated based on a beam index of a beam used to receive the first broadcast message.

Optionally, for the terminal device, the terminal device may receive first broadcast messages on a plurality of beams, but the integrity protection information generated by the terminal device is integrity protection information of the first broadcast message on the beam with highest signal received strength in the first broadcast messages received by the terminal device.

Optionally, for a method for generating the integrity protection information of the first broadcast message by the terminal device, refer to related content in any one of FIG. 3 to FIG. 5. Details are not described herein again. In addition, in the method, the terminal device generates the integrity protection information of the first broadcast message based on the foregoing symmetric solution, where the integrity protection information may be a hash value or MAC-I.

S203: The terminal device sends response information of the first broadcast message, and correspondingly, the network device receives the response information of the first broadcast message, where the response information includes the beam index of the beam and the integrity protection information that is of the first broadcast message and that is generated by the terminal device.

Optionally, the terminal device may choose to encrypt the response information, and then feed back encrypted response information to the network device. For example, in a radio resource control (radio resource control, RRC) connected mode, the terminal device may choose to encrypt the response information by using a symmetric key, or in an RRC non-connected mode, the terminal device may choose to encrypt the response information by using a public key of the base station. Correspondingly, the network device may decrypt the response information, to obtain the beam index carried in the response information, and the integrity protection information of the first broadcast message on the beam.

Optionally, in input parameters of a security algorithm used to obtain the integrity protection information, a timestamp, a downlink frequency, a cell identity, and the beam index may also be referred to as an anti-replay parameter. Correspondingly, the terminal device may send the anti-replay parameter and the integrity protection information together to the network device. The network device may determine, based on the anti-replay parameter, whether the response information of the first broadcast message is a replay message, and if the response information is not the replay message, decrypt the response information.

A signature period corresponding to the first broadcast message on the beam is a sending period in which the network device sends integrity protection information of the first broadcast message on the beam. In other words, the signature period is irrelevant to a period of the integrity protection information that is of the first broadcast message and that is sent by the terminal device. For example, the terminal device may determine whether to report the integrity protection information of the first broadcast message.

Optionally, when receiving the broadcast message that does not carry the integrity protection information, the terminal device may include a signature obtaining indication in the response information, to request the network device to generate and send the integrity protection information when the broadcast message is sent on the beam again.

Optionally, the terminal device may send the response information via the foregoing various messages or signaling. Details are not described herein again.

S204: The network device checks the integrity protection information based on the first broadcast message and the beam index, to obtain a check result of the integrity information protection information of the first broadcast message.

In the method, the network device verifies, based on the anti-replay parameter, the integrity protection information, a key that is the same as that of the terminal device side, and a security algorithm that is the same as that of the terminal device side, whether the first broadcast message is from an authorized base station. Specifically, step S204 may include: The network device generates integrity protection information based on the received anti-replay parameter (including the beam index), the sent first broadcast message, the same key, and the same security algorithm; the network device checks whether the generated integrity protection information is consistent with the integrity protection information sent by the terminal device; and if the generated integrity protection information is consistent with the integrity protection information, the check result of the integrity protection information of the first broadcast message is that the check succeeds or that the first broadcast message received by the terminal device is not tampered with; or if the generated integrity protection information is inconsistent with the integrity protection information, the check result of the integrity protection information of the first broadcast message is that the check fails or that the first broadcast message received by the terminal device is tampered with.

It can be learned that, in the broadcast message protection method 200, the beam index is used as an input parameter of an algorithm for generating the integrity protection information, so that the network device can identify whether there is an attack of a false base station in this beam direction, for example, content of the broadcast message is tampered with by the false base station. This improves security of the broadcast message.

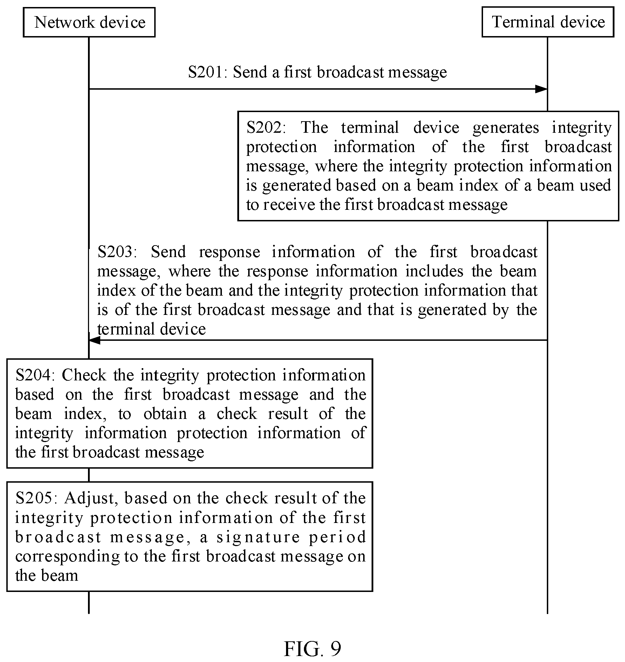

FIG. 9 is a schematic flowchart of a broadcast message protection method 201 according to an embodiment of this application. A difference between the broadcast message protection method 201 shown in FIG. 9 and the broadcast message protection method 200 shown in FIG. 8 lies in that, in the broadcast message protection method 201, a network device may send a signature period corresponding to a broadcast message on a beam, and adjust, based on a check result of integrity protection information of the broadcast message on the beam, the signature period corresponding to the broadcast message on the beam. As shown in FIG. 9, the broadcast message protection method 201 may include but is not limited to the following steps.

S201: The network device sends a first broadcast message and a signature period corresponding to the first broadcast message, and correspondingly, a terminal device receives the first broadcast message and the signature period corresponding to the first broadcast message.

As described above, the signature period corresponding to the first broadcast message on the beam may be carried in the first broadcast message. Details are not described herein again.

S202: The terminal device generates integrity protection information of the first broadcast message, where the integrity protection information is generated based on a beam index of a beam used to receive the first broadcast message.

S203: The terminal device sends response information of the first broadcast message, and correspondingly, the network device receives the response information of the first broadcast message, where the response information includes the beam index of the beam used by the terminal device to receive the first broadcast message, and the integrity protection information that is of the first broadcast message and that is generated by the terminal device based on the beam index.

S204: The network device checks the integrity protection information based on the first broadcast message and the beam index, to obtain a check result of the integrity information protection information of the first broadcast message.

Optionally, for related descriptions of steps S201 to S204, refer to the broadcast message protection method 200 in FIG. 8. Details are not described herein again.

S205: The network device adjusts, based on the check result of the integrity protection information of the first broadcast message, the signature period corresponding to the first broadcast message on the beam.

Correspondingly, the network device may send an adjusted signature period corresponding to the first broadcast message on the beam. Correspondingly, the terminal device receives the adjusted signature period corresponding to the first broadcast message on the beam.

Optionally, the network device may perform statistical analysis on the check result of the integrity protection information of the first broadcast message on the beam in a statistical period, to adaptively adjust the signature period corresponding to the first broadcast message on the beam. For example, in the statistical period, if a check success rate of the check result of the integrity protection information of the first broadcast message on the beam is high, the signature period corresponding to the first broadcast message on the beam is prolonged; or if a check success rate is low, the signature period corresponding to the first broadcast message on the beam is shortened.

It can be learned that, in the broadcast message protection method 201, the beam index may be introduced to generate the integrity protection information by the terminal device, so that the network device identifies whether there is an attack of a false base station in this beam direction, for example, content of the broadcast message is tampered with by the false base station; and in addition, the network device may further adjust the signature period of the integrity protection information of the first broadcast message sent by the network device on the beam, to achieve a balance between security of the broadcast message and required air interface time-frequency resource overheads.

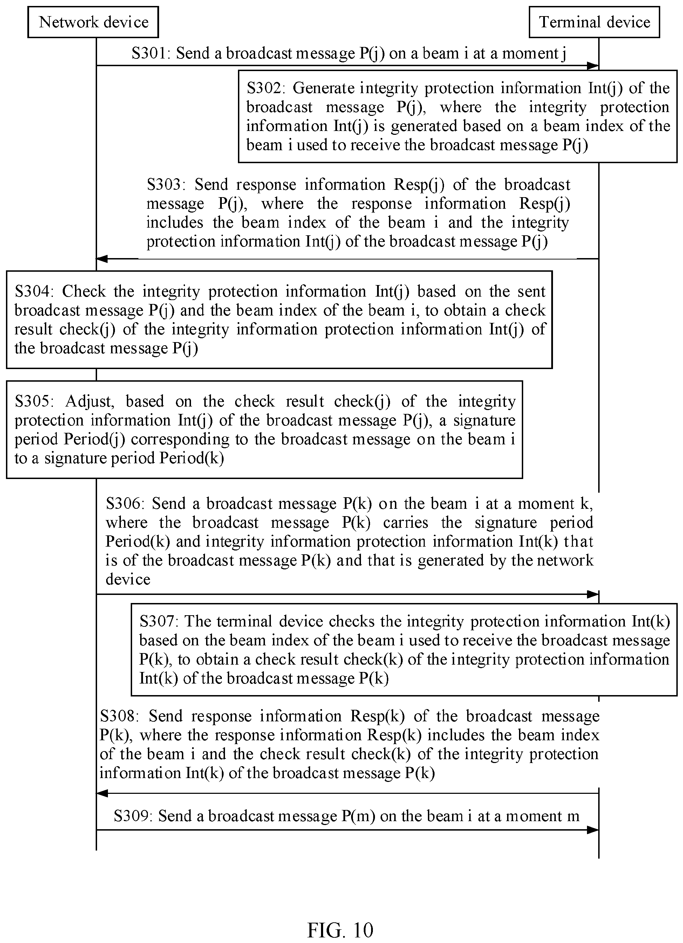

FIG. 10 is a schematic flowchart of the broadcast message protection method 300 according to an embodiment of this application. As shown in FIG. 10, in the broadcast message protection method 300, not only a network device may generate and send integrity protection information of a broadcast message, but also a terminal device may generate and send integrity protection information of the broadcast message. For example, the network device sends a same broadcast message on a same beam i at different moments. It is assumed that the broadcast message P (for example, a system message SIB 1) may be separately represented as broadcast messages P(j), P(k), and P(m) at different sending moments j, k, and m. Signature periods carried in the broadcast messages P(j), P(k), and P(m) may be different, and are respectively represented as Period(j), Period(k), and Period(m). The broadcast message protection method 300 may include but is not limited to the following steps:
S301: The network device sends the broadcast message P(j) on the beam i at the moment j, and correspondingly, the terminal device receives the broadcast message P(j).
   It is assumed that the broadcast message received by the terminal device in each beam direction has highest signal strength on the beam i. In addition, the broadcast message P(j) carries the signature period Period(j).
S302: The terminal device generates integrity protection information Int(j) of the broadcast message P(j), where the integrity protection information Int(j) is generated based on a beam index of the beam i used to receive the broadcast message P(j).
   For a method for generating the integrity protection information Int(j) of the broadcast message P(j) by the terminal device, refer to the foregoing symmetric solution. Details are not described herein again.
S303: The terminal device sends response information Resp(j) of the broadcast message P(j), and correspondingly, the network device receives the response information Resp(j) of the broadcast message P(j), where the response information Resp(j) includes the beam index of the beam i and the integrity protection information Int(j) of the broadcast message P(j).
S304: The network device checks the integrity protection information Int(j) based on the sent broadcast message P(j) and the beam index of the beam i, to obtain a check result check(j) of the integrity information protection information Int(j) of the broadcast message P(j).
S305: The network device adjusts, based on the check result check(j) of the integrity protection information Int(j) of the broadcast message P(j), the signature period Period(j) corresponding to the broadcast message on the beam i to the signature period Period(k).
   Optionally, in step S305, the network device may adjust the signature period based on the check result of the integrity protection information of the broadcast message P in a statistical period from the moment j to the moment k, to obtain the signature period Period(k) that needs to be carried when the broadcast message P(k) is sent on the beam i at the moment k.
S306: The network device sends the broadcast message P(k) on the beam i at the moment k, and correspondingly, the terminal device receives the broadcast message P(k).
   The broadcast message P(k) carries the signature period Period(k) and integrity information protection information Int(k) that is of the broadcast message P(k) and that is generated by the network device. It is assumed that the broadcast message received by the terminal device in each beam direction has highest signal strength on the beam i.
S307: The terminal device checks the integrity protection information Int(k) based on the beam index of the beam i used to receive the broadcast message P(k), to obtain a check result check(k) of the integrity protection information Int(k) of the broadcast message P(k).
S308: The terminal device sends response information Resp(k) of the broadcast message P(k), and the network device receives the response information Resp(k) of the broadcast message P(k), where the response information Resp(k) includes the beam index of the beam i and the check result check(k) of the integrity protection information Int(k) of the broadcast message P(k).
S309: The network device sends the broadcast message P(m) on the beam i at the moment m, and correspondingly, the terminal device receives the broadcast message P(m).

The broadcast message P may be sent based on a transmission period configured for the broadcast message P, and is not limited to the three broadcast messages P(i) to P(m) shown in FIG. 10.

The broadcast message P(m) carries the signature period Period(m), and further carries integrity information protection information Int(m) of the broadcast message P(m) generated by the network device; or the broadcast message P(m) carries the signature period Period(m), but does not carry integrity information protection information Int(m) of the broadcast message P(m). It is assumed that the broadcast message received by the terminal device in each beam direction has highest signal strength on the beam i.

It can be learned that, in the broadcast message protection method 300, for the broadcast message P(j) for which the network device does not send the integrity protection information, after receiving the broadcast message P(j), the terminal device may choose to generate the integrity protection information Int(j) of the broadcast message P(j), so that the network device checks the integrity protection information Int(j), to obtain the check result check(j) of the integrity information protection information Int(j) of the broadcast message P(j), and identifies in a timely manner whether there is an attack of a false base station in this beam direction, for example, content of the broadcast message is tampered with by the false base station. For the broadcast message P(k) for which the network device sends the integrity protection information Int(k), the terminal device may report the check result check(k) in a timely manner, so that the network device learns in a timely manner whether the broadcast message P on the beam is secure. This improves security of the broadcast message.

It may be understood that, to implement the functions in the foregoing embodiments, the network device and the terminal device include corresponding hardware structures and/or software modules for performing the functions. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

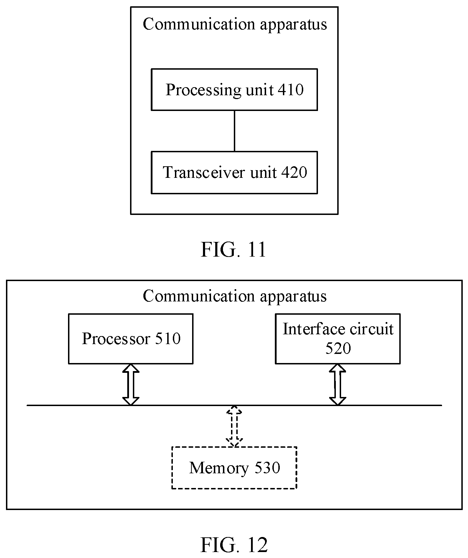

FIG. 11 and FIG. 12 are diagrams of possible structures of communication apparatuses according to an embodiment of this application. These communication apparatuses may be configured to implement functions of the network device or the terminal device in the foregoing method embodiments, and therefore can also achieve beneficial effect of the foregoing method embodiments. In embodiments of this application, the communication apparatus may be any possible terminal device having a wireless transceiver function described above, or may be any possible network device that can provide wireless access for the terminal device described above, or may be a module (for example, a chip) used in the network device or the terminal device.

As shown in FIG. 11, the communication apparatus includes a processing unit 410 and a communication unit 420. The communication apparatus is configured to implement functions of the network device or the terminal device in any one of the embodiments shown in FIG. 3 to FIG. 10 and the implementations thereof. For example,
when the communication apparatus is configured to implement the functions of the network device in the method embodiment shown in FIG. 6 or FIG. 7,
the processing unit 410 is configured to generate integrity protection information of a first broadcast message, where the integrity protection information is generated based on a beam index of a beam used to send the first broadcast message; and the communication unit 420 is configured to send the integrity protection information of the first broadcast message.

In an optional implementation, the communication unit 420 is further configured to send a signature period corresponding to the first broadcast message on the beam, where the signature period corresponding to the first broadcast message on the beam is a sending period of the integrity protection information of the first broadcast message on the beam.

In an optional implementation, the communication unit 420 is further configured to receive response information of the first broadcast message, where the response information includes the beam index and a check result of the integrity protection information of the first broadcast message. The processing unit 410 is further configured to adjust, based on the check result of the integrity protection information of the first broadcast message, the signature period corresponding to the first broadcast message on the beam.

In an optional implementation, the response information of the first broadcast message further includes an anti-replay parameter. Correspondingly, the processing unit 410 verifies, based on the anti-replay parameter, whether the response information of the first broadcast message is a replay message, and if the response information is not the replay message, performs the operation of adjusting, based on the check result of the integrity protection information of the first broadcast message, the signature period corresponding to the first broadcast message on the beam.

In an optional implementation, the response information of the first broadcast message is encrypted, and the processing unit 410 is further configured to decrypt the response information of the first broadcast message, to obtain the check result of the integrity protection information of the first broadcast message.

When the communication apparatus is configured to implement the functions of the terminal device in the method embodiment shown in FIG. 6 or FIG. 7,
the communication unit 420 is configured to receive integrity protection information of a first broadcast message; and the processing unit 410 is configured to check the integrity protection information based on a beam index of a beam used to receive the first broadcast message, to obtain a check result of the integrity protection information of the first broadcast message.

In an optional implementation, the communication unit 420 is further configured to receive a signature period corresponding to the first broadcast message on the beam, where the signature period corresponding to the first broadcast message on the beam is a sending period in which the network device sends integrity protection information of the first broadcast message on the beam.

In an optional implementation, the communication unit 420 is further configured to send response information of the first broadcast message, where the response information includes the beam index and the check result of the integrity protection information of the first broadcast message, and the check result of the integrity protection information of the first broadcast message is used by the network device to adjust the signature period corresponding to the first broadcast message on the beam.

In an optional implementation, that the processing unit 410 checks the integrity protection information based on a beam index of a beam used to receive the first broadcast message, to obtain a check result of the integrity protection information of the first broadcast message may be specifically: checking the integrity protection information based on a timestamp, a downlink frequency, a cell identity, and the beam index of the beam that are used to receive the first broadcast message, to obtain the check result of the integrity protection information of the first broadcast message.

In an optional implementation, the processing unit 410 further encrypts the response information of the first broadcast message, to obtain encrypted response information of the first broadcast message. Correspondingly, the communication unit 420 specifically sends the encrypted response information of the first broadcast message.

For more detailed descriptions of the processing unit 410 and the communication unit 420, directly refer to the related descriptions in the method embodiment shown in FIG. 6 or FIG. 7. Details are not described herein again.

When the communication apparatus is configured to implement the functions of the network device in the method embodiment shown in FIG. 8 or FIG. 9,
the communication unit 420 is configured to send a first broadcast message; the communication unit 420 is further configured to receive response information of the first broadcast message, where the response information includes a beam index of a beam used by the terminal device to receive the first broadcast message, and integrity protection information that is of the first broadcast message and that is generated by the terminal device based on the beam index; and the processing unit 410 is configured to check the integrity protection information based on the first broadcast message and the beam index, to obtain a check result of the integrity information protection information of the first broadcast message.

In an optional implementation, the processing unit 410 is further configured to adjust, based on the check result of the integrity protection information of the first broadcast message, a signature period corresponding to the first broadcast message on the beam, where the signature period corresponding to the first broadcast message on the beam is a sending period in which the network device sends integrity protection information of the first broadcast message on the beam.

In an optional implementation, the communication unit 420 is further configured to send the signature period corresponding to the first broadcast message on the beam.

In an optional implementation, that the processing unit 410 checks the integrity protection information based on the first broadcast message and the beam index, to obtain a check result of the integrity information protection information of the first broadcast message is specifically: checking the integrity protection information based on a timestamp, a downlink frequency, a cell identity, and the beam index that are used to send the first broadcast message, and the first broadcast message, to obtain the check result of the integrity protection information of the first broadcast message.

In an optional implementation, the response information further includes an anti-replay parameter. Correspondingly, the processing unit 410 verifies, based on the anti-replay parameter, whether the response information of the first broadcast message is a replay message, and if the response information is not the replay message, performs the operation of checking the integrity protection information based on the first broadcast message and the beam index, to obtain the check result of the integrity information protection information of the first broadcast message.

In an optional implementation, the response information is encrypted, and the processing unit 410 further needs to decrypt the response information of the first broadcast message, to obtain the beam index and the integrity protection information of the first broadcast message.

When the communication apparatus is configured to implement the functions of the terminal device in the method embodiment shown in FIG. 8 or FIG. 9,
the communication unit 420 is configured to receive a first broadcast message; the processing unit 410 is configured to generate integrity protection information of the first broadcast message, where the integrity protection information is generated based on a beam index of a beam used to receive the first broadcast message; and the communication unit 420 is further configured to send response information of the first broadcast message, where the response information includes the beam index and the integrity protection information of the first broadcast message.

In an optional implementation, the communication unit 420 is further configured to receive a signature period corresponding to the first broadcast message on the beam.

In an optional implementation, the processing unit 410 is further configured to encrypt the response information of the first broadcast message, to obtain encrypted response information of the first broadcast message. Specifically, the communication unit 420 sends the encrypted response information of the first broadcast message.

For more detailed descriptions of the processing unit 410 and the communication unit 420, directly refer to the related descriptions in the method embodiment shown in FIG. 8 or FIG. 9. Details are not described herein again.

When the communication apparatus is configured to implement the functions of the network device in the method embodiment shown in FIG. 10,
the communication unit 420 is configured to send a broadcast message P(j) on a beam i at a moment j; the communication unit 420 is further configured to receive response information Resp(j) of the broadcast message P(j), where the response information j includes a beam index of the beam i and integrity protection information Int(j) of the broadcast message P(j); the processing unit 410 is configured to check the integrity protection information Int(j) based on the sent broadcast message P(j) and the beam index of the beam i, to obtain a check result j of the integrity information protection information Int(j) of the broadcast message P(j); the processing unit 410 is further configured to adjust, based on the check result of the integrity protection information Int(j) of the broadcast message P(j), a signature period Period(j) corresponding to the broadcast message on the beam i to a signature period Period(k); the communication unit 420 is further configured to send a broadcast message P(k) on the beam i at a moment k, where the broadcast message P(k) carries the signature period Period(k) and the integrity information protection information Int(k) of the broadcast message P(k) generated by the network device; and the communication unit 420 is further configured to receive response information Resp(k) of the broadcast message P(k), where the response information Resp(k) includes the beam index of the beam i and a check result check(k) of the integrity protection information Int(k) of the broadcast message P(k).

When the communication apparatus is configured to implement the functions of the terminal device in the method embodiment shown in FIG. 10,
the communication unit 420 is configured to receive a broadcast message P(j) on a beam i at a moment j; the processing unit 410 is configured to generate integrity protection information of the broadcast message P(j), where the integrity protection information is generated based on a beam index of the beam i used to receive the broadcast message P(j); the communication unit 420 is further configured to send response information Resp(j) of the broadcast message P(j), where the response information Resp(j) includes the beam index of the beam i and the integrity protection information Int(j) of the broadcast message P(j); the communication unit 420 is further configured to receive a broadcast message P(k), where the broadcast message P(k) carries a signature period Period(k) and integrity information protection information Int(k) of the broadcast message P(k) generated by the network device; and the processing unit 410 is further configured to check the integrity protection information Int(k) based on the beam index of the beam i used to receive the broadcast message P(k), to obtain a check result check(k) of the integrity protection information Int(k) of the broadcast message P(k); and the communication unit 420 is further configured to send response information Resp(k) of the broadcast message P(k), where the response information Resp(k) includes the beam index of the beam i and the check result check(k) of the integrity protection information Int(k) of the broadcast message P(k).

For more detailed descriptions of the processing unit 410 and the communication unit 420, directly refer to the related descriptions in the method embodiment shown in FIG. 10. Details are not described herein again.

As shown in FIG. 12, the communication apparatus includes a processor 510 and an interface circuit 520. The processor 510 and the interface circuit 520 are coupled to each other. It may be understood that the interface circuit 520 may be a transceiver or an input/output interface. Optionally, the communication apparatus may further include a memory 530, configured to store instructions executed by the processor 510, or store input data required by the processor 510 to run the instructions, or store data generated after the processor 510 runs the instructions.

When the communication apparatus is configured to implement the method shown in any one of FIG. 6 to FIG. 10, the processor 510 is configured to implement a function of the processing unit 410, and the interface circuit 520 is configured to implement a function of the communication unit 420.

When the communication apparatus is a chip used in a terminal device, the chip implements a function of the terminal device in the foregoing method embodiments. The chip receives information from another module (for example, a radio frequency module or an antenna) in the terminal device, where the information is sent by a network device to the terminal device. Alternatively, the chip sends information to another module (for example, a radio frequency module or an antenna) in the terminal device, where the information is sent by the terminal device to a network device.

When the communication apparatus is a module used in a network device, the module implements a function of the network device in the foregoing method embodiments. The module receives information from another module (for example, a radio frequency module or an antenna) in the network device, where the information is sent by a terminal device to the network device. Alternatively, the module sends information to another module (for example, a radio frequency module or an antenna) in the network device, where the information is sent by the network device to the terminal device. The module herein may be a baseband chip of the network device, or may be a distributed unit (distributed unit, DU) or another module. The DU herein may be a DU in an open radio access network (open radio access network, O-RAN) architecture.

It may be understood that the processor in embodiments of this application may be a central processing unit (Central Processing Unit, CPU), may be another general-purpose processor, a digital signal processor (Digital Signal Processor, DSP), an application-specific integrated circuit (Application Specific Integrated Circuit, ASIC), a field-programmable gate array (Field Programmable Gate Array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in the ASIC. In addition, the ASIC may be disposed in a base station or a terminal. Certainly, the processor and the storage medium may exist in the base station or the terminal as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile storage medium or a non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A broadcast message protection method, wherein the method comprises:
generating integrity protection information of a first broadcast message, wherein the integrity protection information is generated based on a beam index of a beam used to send the first broadcast message; and
sending the integrity protection information of the first broadcast message.

2. The method according to claim 1, wherein the method further comprises:
sending a signature period corresponding to the first broadcast message on the beam, wherein the signature period corresponding to the first broadcast message on the beam is a sending period of the integrity protection information of the first broadcast message on the beam.

3. The method according to claim 2, wherein the method further comprises:
receiving response information of the first broadcast message, wherein the response information comprises the beam index and a check result of the integrity protection information of the first broadcast message; and
adjusting, based on the check result of the integrity protection information of the first broadcast message, the signature period corresponding to the first broadcast message on the beam.

4. The method according to any one of claims 1 to 3, wherein the first broadcast message comprises different broadcast messages having a same transmission period.

5. The method according to any one of claims 1 to 4, wherein the integrity protection information is further generated based on a timestamp, a downlink frequency, and a cell identity that are used to send the first broadcast message.

6. The method according to claim 3, wherein the response information further comprises an anti-replay parameter, and the method further comprises:
verifying, based on the anti-replay parameter, whether the response information of the first broadcast message is a replay message; and
if the response information is not the replay message, performing the step of adjusting, based on the check result of the integrity protection information of the first broadcast message, the signature period corresponding to the first broadcast message on the beam.

7. The method according to claim 3, wherein the response information is encrypted, and the method further comprises:
decrypting the response information of the first broadcast message, to obtain the beam index and the check result of the integrity protection information of the first broadcast message.

8. A broadcast message protection method, wherein the method comprises:
receiving integrity protection information of a first broadcast message; and
checking the integrity protection information based on a beam index of a beam used to receive the first broadcast message, to obtain a check result of the integrity protection information of the first broadcast message.

9. The method according to claim 8, wherein the method further comprises:
receiving a signature period corresponding to the first broadcast message on the beam, wherein the signature period corresponding to the first broadcast message on the beam is a sending period of the integrity protection information of the first broadcast message on the beam.

10. The method according to claim 9, wherein the method further comprises:
sending response information of the first broadcast message, wherein the response information comprises the beam index and the check result of the integrity protection information of the first broadcast message, wherein
the check result of the integrity protection information of the first broadcast message is used by a network device to adjust the signature period corresponding to the first broadcast message on the beam.

11. The method according to any one of claims 8 to 10, wherein the first broadcast message comprises different broadcast messages having a same transmission period.

12. The method according to any one of claims 8 to **11,** wherein the checking the integrity protection information based on a beam index of a beam used to receive the first broadcast message, to obtain a check result of the integrity protection information of the first broadcast message comprises:
checking the integrity protection information based on a timestamp, a downlink frequency, a cell identity, and the beam index of the beam that are used to receive the first broadcast message, to obtain the check result of the integrity protection information of the first broadcast message.

13. The method according to claim 10, wherein the response information further comprises an anti-replay parameter that is used by the network device to verify whether the response information of the first broadcast message is a replay message.

14. The method according to claim 10, wherein the sending response information of the first broadcast message comprises:
encrypting the response information of the first broadcast message, to obtain encrypted response information of the first broadcast message; and
sending the encrypted response information of the first broadcast message.

15. A broadcast message protection method, wherein the method further comprises:
sending a first broadcast message;
receiving response information of the first broadcast message, wherein the response information comprises a beam index of a beam used by a terminal device to receive the first broadcast message, and integrity protection information that is of the first broadcast message and that is generated by the terminal device based on the beam index; and
checking the integrity protection information based on the first broadcast message and the beam index, to obtain a check result of the integrity protection information of the first broadcast message.

16. The method according to claim 15, wherein the method further comprises:
adjusting, based on the check result of the integrity protection information of the first broadcast message, a signature period corresponding to the first broadcast message on the beam, wherein
the signature period corresponding to the first broadcast message on the beam is a sending period in which integrity protection information of the first broadcast message is sent on the beam.

17. The method according to claim 16, wherein before the adjusting, based on the check result of the integrity protection information of the first broadcast message, a signature period corresponding to the first broadcast message on the beam, the method further comprises:
sending the signature period corresponding to the first broadcast message on the beam.

18. The method according to any one of claims 15 to 17, wherein the first broadcast message comprises different broadcast messages having a same transmission period.

19. The method according to any one of claims 15 to 18, wherein the checking the integrity protection information based on the first broadcast message and the beam index, to obtain a check result of the integrity information protection information of the first broadcast message comprises:
checking the integrity protection information based on a timestamp, a downlink frequency, a cell identity, and the beam index that are used to send the first broadcast message, and the first broadcast message, to obtain the check result of the integrity protection information of the first broadcast message.

20. The method according to any one of claims 15 to 19, wherein the response information further comprises an anti-replay parameter, and the method further comprises:
verifying, based on the anti-replay parameter, whether the response information of the first broadcast message is a replay message; and
if the response information is not the replay message, performing the step of checking the integrity protection information based on the first broadcast message and the beam index, to obtain the check result of the integrity information protection information of the first broadcast message.

21. The method according to any one of claims 15 to 20, wherein the response information is encrypted, and the method further comprises:
decrypting the response information of the first broadcast message, to obtain the beam index and the integrity protection information.

22. A broadcast message protection method, wherein the method further comprises:
receiving a first broadcast message;
generating integrity protection information of the first broadcast message, wherein the integrity protection information is generated based on a beam index of a beam used to receive the first broadcast message; and
sending response information of the first broadcast message, wherein the response information comprises the beam index and the integrity protection information of the first broadcast message.

23. The method according to claim 22, wherein before the generating integrity protection information of the first broadcast message on the beam based on the beam index of the beam used to receive the first broadcast message, the method further comprises:
receiving a signature period corresponding to the first broadcast message on the beam, wherein
the signature period corresponding to the first broadcast message on the beam is a sending period in which a network device sends integrity protection information of the first broadcast message on the beam.

24. The method according to claim 22 or 23, wherein the first broadcast message comprises different broadcast messages having a same transmission period.

25. The method according to any one of claims 22 to 24, wherein the integrity protection information is further generated based on a timestamp, a downlink frequency, and a cell identity that are used to receive the first broadcast message.

26. The method according to any one of claims 22 to 25, wherein the response information further comprises an anti-replay parameter that is used by the network device to verify whether the response information of the first broadcast message is a replay message.

27. The method according to any one of claims 22 to 26, wherein the sending response information of the first broadcast message comprises:
encrypting the response information of the first broadcast message, to obtain encrypted response information of the first broadcast message; and
sending the encrypted response information of the first broadcast message.

28. A communication system, wherein the communication system comprises a network device and a terminal device; and the network device is configured to perform the method according to any one of claims 1 to 7, and the terminal device is configured to perform the method according to any one of claims 8 to 14; or
the network device is configured to perform the method according to any one of claims 15 to 21, and the terminal device is configured to perform the method according to any one of claims 22 to 27.

29. A communication apparatus, comprising a module configured to perform the method according to any one of claims 1 to 7, or comprising a module configured to perform the method according to any one of claims 8 to **14, or** comprising a module configured to perform the method according to any one of claims 15 to 21, or comprising a module configured to perform the method according to any one of claims 22 to 27.

30. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement, through a logic circuit or by executing code instructions, the method according to any one of claims 1 to 7, or the method according to any one of claims 8 to **14,** or the method according to any one of claims 15 to 21, or the method according to any one of claims 22 to 27.

31. A computer-readable storage medium, wherein the storage medium stores a computer program or instructions, and when the computer program or the instructions are executed by a communication apparatus, the method according to any one of claims 1 to 7 is implemented, or the method according to any one of claims 8 to **14** is implemented, or the method according to any one of claims 15 to 21 is implemented, or the method according to any one of claims 22 to 27 is implemented.

32. A communication apparatus, wherein the communication apparatus comprises a processor and a transceiver, wherein
the transceiver is configured to communicate with another communication apparatus, and the processor is configured to run a computer program, so that the communication apparatus implements the method according to any one of claims 1 to 7, or implements the method according to any one of claims 8 to **14,** or implements the method according to any one of claims 15 to 21, or implements the method according to any one of claims 22 to 27.

33. A communication apparatus, wherein the communication apparatus comprises a memory, a processor, and a transceiver, wherein
the transceiver is configured to receive a signal or send a signal, the memory is configured to store instructions or a computer program, and the processor is configured to execute the computer program or the instructions stored in the memory, so that the communication apparatus performs the method according to any one of claims 1 to 7, or implements the method according to any one of claims 8 to 14, or implements the method according to any one of claims 15 to 21, or implements the method according to any one of claims 22 to 27.

34. A computer program product, comprising computer instructions, wherein when the computer instructions are run on a computer, the computer is enabled to perform the method according to any one of claims 1 to 7, or implement the method according to any one of claims 8 to 14, or implement the method according to any one of claims 15 to 21, or implement the method according to any one of claims 22 to 27.
